(19) Europäisches Patentamt
European Patent Office
Office européen des brevets

(11) EP 4 224 243 A1

(12) EUROPEAN PATENT APPLICATION
published in accordance with Art. 153(4) EPC

(43) Date of publication:
**09.08.2023 Bulletin 2023/32**

(21) Application number: **21875778.9**

(22) Date of filing: **30.09.2021**

(51) International Patent Classification (IPC):
***G02C 7/02*** *(2006.01)* ***C08G 18/38*** *(2006.01)*
***C08G 75/08*** *(2006.01)* ***C08K 5/3475*** *(2006.01)*
***C08L 75/04*** *(2006.01)* ***C08L 81/02*** *(2006.01)*
***G02B 1/00*** *(2006.01)* ***G02C 1/00*** *(2006.01)*
***G02C 7/00*** *(2006.01)*

(52) Cooperative Patent Classification (CPC):
(C-Sets available)
**C08G 75/08; C08G 18/246; C08G 18/3876; C08G 18/757; C08G 18/758; C08G 18/7642; C08K 5/3467; C08L 81/02; G02B 1/00; G02B 1/041;** C08K 5/0041; G02C 7/104 (Cont.)

(86) International application number:
**PCT/JP2021/036102**

(87) International publication number:
**WO 2022/071482 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 JP 2020164980**

(71) Applicant: **Hoya Lens Thailand Ltd.**
**Pathumthani 12130 (TH)**

(72) Inventor: **KOUSAKA, Masahisa**
**Tokyo 160-8347 (JP)**

(74) Representative: **Beckmann, Claus**
**Kraus & Weisert**
**Patentanwälte PartGmbB**
**Thomas-Wimmer-Ring 15**
**80539 München (DE)**

# (54) SPECTACLE LENS

(57) One embodiment according to the present disclosure relates to a spectacle lens comprising a compound represented by formula (1) :

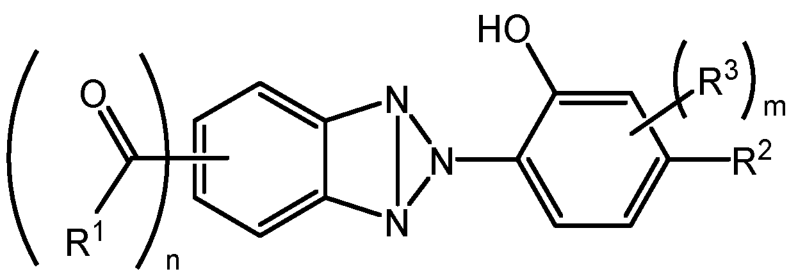

(1)

.



Processed by Luminess, 75001 PARIS (FR)

(Cont. next page)

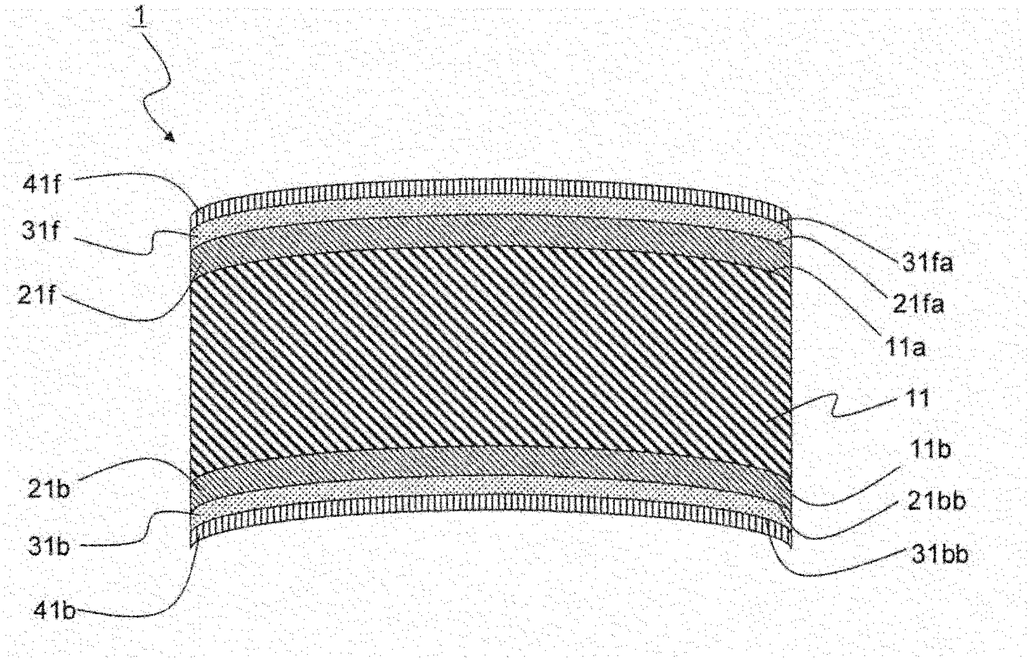


(52) Cooperative Patent Classification (CPC): (Cont.)

C-Sets
**C08K 5/3467, C08L 75/04;**
**C08K 5/3467, C08L 81/00;**
**G02B 1/041, C08L 75/04, C08L 81/00, C08K 5/0041**

## Description

[Technical Field]

The present disclosure relates to a spectacle lens.

[Background Art]

In spectacle lenses, cutting light rays in the blue region (wavelength range of 380 to 500 nm) reduces glare and improves visibility and contrast. Furthermore, regarding the eyes' health, it is said that light rays in the blue region (wavelength range of 380 to 500 nm) may cause damage to retinas or the like because such light rays have high energy. The damage by blue light is referred to as a "blue light hazard". In particular, it is said that the low wavelength side near the wavelength of 380 to 420 nm is the most dangerous, and the light of this region should desirably be cut.

PTL 1 discloses an optical material including at least one UV ray absorber (a) with a maximum absorbing peak within the range of 350 nm or more and 370 nm or less, and the light transmittance measured at a thickness of 2 mm satisfies the following characteristics (1) to (3): (1) the light transmittance at a wavelength of 410 nm is 10% or less; (2) the light transmittance at a wavelength of 420 nm is 70% or less; and (3) the light transmittance at a wavelength of 440 nm is 80% or more.

[Citation List]

[Patent Literature]

[PTL 1] WO 2014/133111

[Summary of Invention]

[Technical Problem]

According to a conventional spectacle lens as shown in PTL 1, the transmittance of light of a wavelength of 410 nm can be reduced by including a specific UV absorber. In general, however, UV absorbers also absorb light of wavelengths near 410 nm when they exhibit light absorption properties at that wavelength. For that reason, when a UV absorber reduces the transmittance of light of a wavelength of 410 nm, light in the visible light region is also absorbed, and coloring issues arise, such as the yellowing of spectacle lenses. Yellow-colored spectacle lenses give an impression of deterioration in appearance. Thus, for example, the inclusion of a coloring agent will give the lens a gray or slightly bluish tint, which increases costs and, in some cases, reduces transmittance. Therefore, suppressing the coloration of spectacle lenses due to UV absorbers by increasing the transmittance of light of a wavelength of 430 nm is focused on.

An embodiment of the present disclosure relates to a spectacle lens that reduces the transmittance of light of a wavelength of 410 nm and shows excellent transmittance of light of 430 nm.

[Solution to Problem]

One embodiment according to the present disclosure relates to a spectacle lens including a compound represented by formula (1)

[C1]

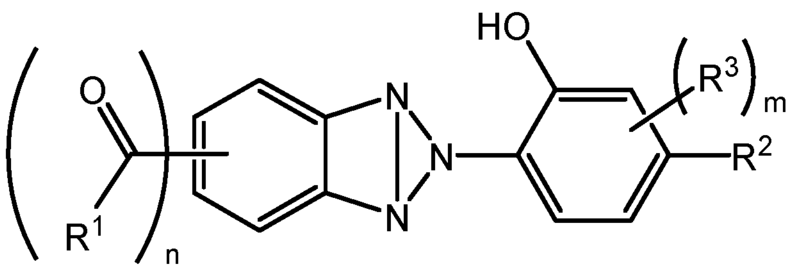

(1)

wherein

$R^1$ is an alkoxy group having 1 to 20 carbon atoms;
$R^2$ is an alkyl group having 1 to 12 carbon atoms or an alkoxy group having 1 to 12 carbon atoms;
$R^3$ is an alkyl group having 1 to 12 carbon atoms or an alkoxy group having 1 to 12 carbon atoms;
n is an integer of 1 to 2; and
m is an integer of 0 to 2).

[Advantageous Effects of Invention]

According to an embodiment of the present disclosure, a spectacle lens that reduces the transmittance of light at a wavelength of 410 nm and shows excellent transmittance at a wavelength of 430 nm can be provided.

[Brief Description of Drawings]

Fig. 1 is a schematic cross-sectional view of the spectacle lens 1 of the present embodiment.

[Description of Embodiments]

Hereinafter, embodiments according to the present disclosure will be described in detail with reference to the drawings, as necessary. However, the disclosure is not limited thereto, and various modifications are possible without departing from the gist thereof. It should be noted that, in the drawings, the same symbols are assigned to the same elements and will not be further explained. Unless otherwise specified, positional relationships, such as vertical and horizontal relationships, are based on the positional relationships illustrated in the drawings. Further, the dimensional ratios of the drawings are not limited to those illustrated therein.
It should be noted that, in the present description, for example, the notation of a numerical range of "1 to 100" shall encompass both the lower limit "1" and the upper limit "100". The same applies to notations of other numerical ranges.
For example, the "cured product of an isocyanate component and an active hydrogen-containing compound component" does not mean excluding other components but means a cured product of a composition containing at least an isocyanate component and an active hydrogen-containing compound component.

[Spectacle Lens]

The spectacle lens according to the present embodiment includes a compound represented by formula (1):

[C2]

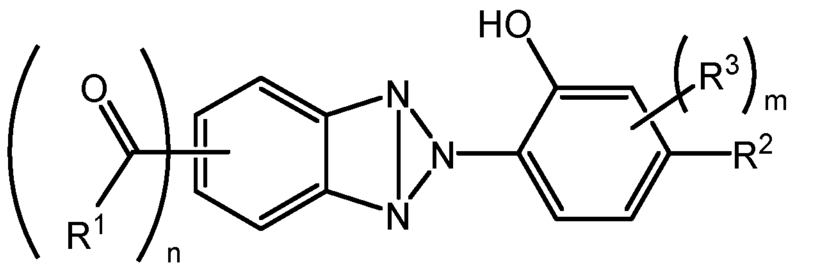

(1)

wherein

$R^1$ is an alkoxy group having 1 to 20 carbon atoms;
$R^2$ is an alkyl group having 1 to 12 carbon atoms or an alkoxy group having 1 to 12 carbon atoms;
$R^3$ is an alkyl group having 1 to 12 carbon atoms or an alkoxy group having 1 to 12 carbon atoms; and
m is an integer of 0 to 2 (hereinafter referred to as "compound 1").

According to an embodiment of the present disclosure, a spectacle lens that reduces the transmittance of light at a wavelength of 410 nm and shows excellent transmittance at a wavelength of 430 nm can be provided.

<Compound 1>

The spectacle lens according to the present embodiment containing a compound 1 represented by formula (1)

reduces the transmittance of light at a wavelength of 410 nm and shows excellent transmittance at a wavelength of 430 nm. Light with a wavelength of 410 nm is in the visible light range but has relatively high energy. Thus, such light is harmful to the eyes when visually viewed over a long period of time. The compound 1 has a -COR$^1$ group on the benzotriazole ring, allowing compound 1 to absorb light of a wavelength of 410 nm. Furthermore, it is desirable not to absorb light on the side of wavelengths longer than 410 nm because the inclusion of compounds that absorb light in the visible light region will easily cause coloration. However, when the absorption spectrum is observed, the absorption peak of the compound also absorbs light of the peak wavelength and the surrounding wavelengths thereof, resulting in a peak-shaped spectrum. Therefore, when the absorption of light of a wavelength of 410 nm is increased, the light in the surrounding area of the wavelength of 410 nm is also absorbed, which may easily cause coloration. Therefore, from the viewpoint of the problem of the coloring of spectacle lenses, or in order to make such coloring less noticeable, using a large amount of coloring agents is required to make the hue a neutral gray, which results in a reduction of the luminous transmittance, etc. Regarding this issue, the compound 1 has a -COR$^1$ group on the benzotriazole ring, which can reduce the absorption at a wavelength of 430 nm.

The site of substitution of -COR$^1$ group is preferably the 5-position of the benzotriazole ring from the viewpoint of reducing the transmittance of light of a wavelength of 410 nm and reducing the transmittance at a wavelength of 430 nm.

In formula (1), R$^1$ is an alkoxy group having 1 to 20 carbon atoms.

The number of carbon atoms in the alkoxy group in R$^1$ is preferably 2 to 20, more preferably 4 to 20, still more preferably 6 to 18, further preferably 6 to 15, and even more preferably 6 to 12. The increase in the number of carbons in the alkoxy groups increases the solubility of the compound 1 in organic compounds such as isocyanate components and polythiol components. The alkyl group in R$^1$ may be branched or linear, and a branched alkyl group is preferred.

Examples of the alkoxy group in R$^1$ include a methoxy group, an ethoxy group, a n-propyloxy group, an isopropyloxy group, a n-butyloxy group, a sec-butyloxy group, a tert-butyloxy group, a pentyloxy group, a 1-methylpentyloxy group, a 2-methylpentyloxy group, a 3-methylpentyloxy group, a 1-ethylpentyloxy group, a 2-ethylpentyloxy group, a 3-ethylpentyloxy group, a n-hexyloxy group, a 1-methylhexyloxy group, a 2-methylhexyloxy group, a 3-methylhexyloxy group, a 1-ethylhexyloxy group, a 2-ethylhexyloxy group, a 3-ethylhexyloxy group, a n-heptyloxy group, a 1-methylheptyloxy group, a 2-methylheptyloxy group, a 3-methylheptyloxy group, a 1-ethylheptyloxy group, a 2-ethylheptyloxy group, a 3-ethylheptyloxy group, a n-octyloxy group, a 1-methyloctyloxy group, a 2-methyloctyloxy group, a 3-methyloctyloxy group, a 1-ethyloctyloxy group, a 2-ethyloctyloxy group, a 3-ethyloctyloxy group, a n-decyloxy group, a n-dodecyloxy group, a n-dodecyloxy group, a n-tetradecyloxy group, a n-hexadecyloxy group, a n-octadecyloxy group, and a n-icosyloxy group. Among these, a tert-butyloxy group, a hexyloxy group, an n-octyloxy group, and a 2-ethylhexyloxy group are preferred, and a 2-ethylhexyloxy group is preferred.

As stated above, R$^1$ is preferably an alkoxy group having 4 to 20 carbon atoms, more preferably a branched alkoxy group having 4 to 20 carbon atoms, still more preferably tert-butyloxy group and 2-ethylhexyloxy group, and further preferably 2-ethylhexyloxy group.

n is an integer of 1 to 2, and preferably 1.

In the formula (1), R$^2$ represents an alkyl group having 1 to 12 carbon atoms or an alkoxy group having 1 to 12 carbon atoms, and for the alkyl group and the alkoxy group, the number of carbon atoms is each independently preferably 1 to 8, more preferably 2 to 8, and still more preferably 4 to 8. The alkyl group and alkoxy group may be branched or linear. Among alkyl groups and alkoxy groups, alkoxy groups are preferable.

Examples of alkyl groups include a methyl group, an ethyl group, an n-propyl group, an isopropyl group, an n-butyl group, a sec-butyl group, a tert-butyl group, a pentyl group, a hexyl group, a heptyl group, an n-octyl group, a 1,1,3,3-tetramethylbutyl group, a nonyl group, a decyl group, an undecyl group, and a dodecyl group.

Examples of alkoxy groups include a methoxy group, an ethoxy group, an n-propyloxy group, an isopropyloxy group, an n-butyloxy group, a sec-butyloxy group, a tert-butyloxy group, a pentyloxy group, a hexyloxy group, a heptyloxy group, an octyloxy group, a nonyloxy group, a decyloxy group, an undecyloxy group, and a dodecyloxy group. Among them, a methoxy group and an ethoxy group are preferable.

In formula (1), R$^3$ is an alkyl group having 1 to 12 carbon atoms or an alkoxy group having 1 to 12 carbon atoms. Examples of the alkyl group and the alkoxy group in R$^3$ are the same as those listed for R$^2$.

m is an integer of 0 to 2, and preferably 0.

Although not particularly limited, specific examples of the compound 1 include

2-ethylhexyl 2-(2-hydroxy-4-methoxyphenyl)-2H-benzotriazole-5-carboxylate (a compound represented by the following formula (1-1)),
2-ethylhexyl 2-(2-hydroxy-4-ethoxyphenyl)-2H-benzotriazole-5-carboxylate (a compound represented by the following formula (1-2)),
2-ethylhexyl 2-(2-hydroxy-4-octyloxyphenyl)-2H-benzotriazole-5-carboxylate,
methyl 2-(2-hydroxy-4-methoxyphenyl)-2H-benzotriazole-5-carboxylate,
methyl 2-(2-hydroxy-4-ethoxyphenyl)-2H-benzotriazole-5-carboxylate,

methyl 2-(2-hydroxy-4-octyloxyphenyl)-2H-benzotriazole-5-carboxylate,
ethyl 2-(2-hydroxy-4-methoxyphenyl)-2H-benzotriazole-5-carboxylate,
ethyl 2-(2-hydroxy-4-ethoxyphenyl)-2H-benzotriazole-5-carboxylate,
ethyl 2-(2-hydroxy-4-octyloxyphenyl)-2H-benzotriazole-5-carboxylate,
n-octyl 2-(2-hydroxy-4-methoxyphenyl)-2H-benzotriazole-5-carboxylate,
n-octyl 2-(2-hydroxy-4-ethoxyphenyl)-2H-benzotriazole-5-carboxylate, and
n-octyl 2-(2-hydroxy-4-octyloxyphenyl)-2H-benzotriazole-5-carboxylate.

Among these compounds 1, one may be used singly, or two or more of them may be used.

Among these, 2-ethylhexyl 2-(2-hydroxy-4-methoxyphenyl)-2H-benzotriazole-5-carboxylate and 2-ethylhexyl 2-(2-hydroxy-4-ethoxyphenyl)-2H-benzotriazole-5-carboxylate are preferred.

The spectacle lens according to the present embodiment includes, for example, a lens substrate. The spectacle lens according to the present embodiment may include at least one layer selected from the group consisting of a hard coat layer, a base layer, and an anti-reflection layer.

Fig. 1 is a schematic cross-sectional view of a spectacle lens 1 of the present embodiment. A spectacle lens 1 of the present embodiment includes a lens substrate 11, a hard coat layer 21f disposed on the surface 11a side on the object side surface of this lens substrate 11, a functional layer 31f disposed on the surface 21fa side of the object side of the hard coat layer 21f, and a water repellent layer 41f disposed on the surface 31fa side of the object side of this functional layer 31f.

When the lens substrate 11 is a finished lens, a spectacle lens 1 of the present embodiment includes a hard coat layer 21b disposed on the surface 11b side on the eyeball side of the lens substrate 11, a functional layer 31b disposed on the surface 21bb side of the eyeball side of this hard coat layer 21b, and a water repellent layer 41b disposed on the surface 31bb side of the eyeball side of this functional layer 31b.

It should be noted that, although not illustrated, a base layer may be disposed between the lens substrate 11 and the hard coat layer 21f, or between the lens substrate 11 and the hard coat layer 21b.

<Lens Substrate>

The lens substrate may contain the compound 1 and a resin.

The spectacle lens preferably contains 0.05 parts by mass or more and 2.00 parts by mass or less of the compound 1 in relation to 100 parts by mass of the resin in the lens substrate. From the viewpoint of further reducing the transmittance of light of a wavelength of 410 nm and further increasing the transmittance of light of a wavelength of 430 nm, the content of the compound 1 is preferably 0.10 parts by mass or more and 2.00 parts by mass or less, more preferably 0.15 parts by mass or more and 1.50 parts by mass or less, and further preferably 0.20 parts by mass or more and 1.00 parts by mass or less in relation to 100 parts by mass of the resin in the lens substrate.

From the viewpoint of further reducing the transmittance of light of a wavelength of 410 nm, further increasing the transmittance of light of a wavelength of 430 nm, and suppressing the decrease in Abbe's number, the content of the compound 1 is preferably 0.05 parts by mass or more and 0.60 parts by mass or less, more preferably 0.10 parts by mass or more and 0.55 parts by mass or less, and still more preferably 0.20 parts by mass or more and 0.50 parts by mass or less in relation to 100 parts by mass of the resin in the lens substrate.

[Resin]

Examples of the resin of the lens substrate include a urethane-based resin, an episulfide resin, a polycarbonate resin, and an acrylic resin.

The resin is preferably at least one selected from the group consisting of a polythiourethane resin, a polysulfide resin, and a polyurethane resin, and more preferably at least one selected from the group consisting of a polythiourethane resin and a polysulfide resin.

(Urethane-based Resin)

A urethane-based resin is a cured product of a polymerizable composition containing an isocyanate component and an active hydrogen-containing compound component. Examples of urethane-based resins include a thiourethane resin including a polymerization site of an isocyanate component and a polythiol component; a urethane resin including a polymerization site of an isocyanate component and a polyol component; and a urethane urea resin having a polythiourethane site that is a polymerization site of an isocyanate component and a polythiol or polyol component and a polyurea site that is a polymerization product of an isocyanate component and a polyamine component.

(Isocyanate Component)

Examples of isocyanate components include a polyisocyanate compound having an aromatic ring, a polyisocyanate compound having an aliphatic ring, and a linear or branched aliphatic polyisocyanate compound.
Examples of polyisocyanate compounds having an aromatic ring include diisocyanatobenzene, 2,4-tolylenediisocyanate, 2,6-tolylenediisocyanate, ethylphenylene diisocyanate, isopropylphenylene diisocyanate, dimethylphenylene diisocyanate, diethylphenylene diisocyanate, diisopropylphenylene diisocyanate, trimethylbenzene triisocyanate, benzene triisocyanate, biphenyl diisocyanate, 4,4'-diphenylmethane diisocyanate, 4,4'-methylenebis(2-methylphenylisocyanate), bibenzyl-4,4'-diisocyanate, bis(isocyanatophenyl)ethylene, 1,3-bis(isocyanatomethyl)benzene, 1,4-bis(isocyanatomethyl)benzene, 1,3-bis(isocyanatoethyl)benzene, bis(isocyanatopropyl)benzene, $\alpha,\alpha,\alpha',\alpha'$-tetramethylxylylene diisocyanate, bis(isocyanatobutyl)benzene, bis(isocyanatomethyl)naphthalene, bis(isocyanatomethylphenyl)ether, 2-isocyanatophenyl-4-isocyanatophenyl sulfide, bis(4-isocyanatophenyl) sulfide, bis(4-isocyanatomethylphenyl) sulfide, bis(4-isocyanatophenyl) disulfide, bis(2-methyl-5-isocyanatophenyl) disulfide, bis(3-methyl-5-isocyanatophenyl) disulfide, bis(3-methyl-6-isocyanatophenyl) disulfide, bis(4-methyl-5-isocyanatophenyl) disulfide, bis(3-methyloxy-4-isocyanatophenyl) disulfide, and bis(4-methyloxy-3-isocyanatophenyl) disulfide.
Examples of polyisocyanate compounds having an aliphatic ring include 1,3-diisocyanatocyclohexane, 1,4-diisocyanatocyclohexane, isophorone diisocyanate, 1,3-bis(isocyanatomethyl)cyclohexane, 1,4-bis(isocyanatomethyl)cyclohexane, dicyclohexylmethane-4,4'-diisocyanate, dicyclohexylmethane-2,4'-diisocyanate, 2,5-bis(isocyanatomethyl)-bicyclo[2.2.1]heptane, 2,6-bis(isocyanatomethyl)-bicyclo[2.2.1]heptane, 2,5-diisocyanato-1,4-dithiane, 2,5-bis(isocyanatomethyl)-1,4-dithiane, 4,5-diisocyanato-1,3-dithiolane, 4,5-bis(isocyanatomethyl)-1,3-dithiolane, and 4,5-bis(isocyanatomethyl)-2-methyl-1,3-dithiolane.
Examples of linear or branched aliphatic polyisocyanate compounds include pentamethylene diisocyanate, hexamethylene diisocyanate, 2,2-dimethylpentane diisocyanate, 2,2,4-trimethylhexane diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanato-4-isocyanatomethyloctane, bis(isocyanatoethyl) carbonate, bis(isocyanatoethyl) ether, lysine diisocyanatomethyl ester, lysine triisocyanate, bis(isocyanatomethyl) sulfide, bis(isocyanatoethyl) sulfide, bis(isocyanatopropyl) sulfide, bis(isocyanatohexyl) sulfide, bis(isocyanatomethyl) sulfone, bis(isocyanatomethyl) disulfide, bis(isocyanatoethyl) disulfide, bis(isocyanatopropyl) disulfide, bis(isocyanatomethylthio)methane, bis(isocyanatoethylthio)methane, bis(isocyanatomethylthio)ethane, bis(isocyanatoethylthio)ethane, 1,5-diisocyanato-2-isocyanatomethyl-3-pentane, 1,2,3-tris(isocyanatomethylthio)propane, 1,2,3-tris(isocyanatoethylthio)propane, 3,5-dithia-1,2,6,7-heptanetetraisocyanate, 2,6-diisocyanatomethyl-3,5-dithia-1,7-heptanediisocyanate, 2,5-diisocyanatomethylthiophene, 4-isocyanatoethylthio-2,6-dithia-1,8-octanediisocyanate, 1,2-diisothiocyanatoethane, and 1,6-diisothiocyanatohexane.
These may be used alone, or two or more thereof may be used in combination.
The isocyanate component preferably includes at least one (hereinafter referred to as a "suitable isocyanate compound") selected from the group consisting of bis(isocyanatomethyl)bicyclo[2.2.1]heptane, bis(isocyanatomethyl)cyclohexane, bis(isocyanatomethyl)benzene, tolylene diisocyanate, diphenylmethane diisocyanate, dicyclohexylmethane diisocyanate, hexamethylene diisocyanate, and pentamethylene diisocyanate.
Example of bis(isocyanatomethyl)bicyclo[2.2.1]heptane include at least one selected from the group consisting of 2,5-bis(isocyanatomethyl)bicyclo[2.2.1]heptane and 2,6-bis(isocyanatomethyl)bicyclo[2.2.1]heptane, and bis(isocyanatomethyl)bicyclo[2.2.1]heptane is preferably a mixture of 2,5-bis(isocyanatomethyl)bicyclo[2.2.1]heptane and 2,6-bis(isocyanatomethyl)bicyclo[2.2.1]heptane.
Example of bis(isocyanatomethyl)cyclohexane include 1,3-bis(isocyanatomethyl)cyclohexane and 1,4-bis(isocyanatomethyl)cyclohexane. Among these, 1,3-bis(isocyanatomethyl)cyclohexane is preferred.
Examples of bis(isocyanatomethyl)benzene include 1,3-bis(isocyanatomethyl)benzene and 1,4-bis(isocyanatomethyl)benzene. Among these, 1,3-bis(isocyanatomethyl)benzene is preferred.
Examples of tolylene diisocyanate include 2,4-tolylene diisocyanate and 2,6-tolylene diisocyanate. Among these, 2,4-tolylene diisocyanate is preferred.
Examples of diphenylmethane diisocyanate include 4,4'-diphenylmethane diisocyanate and 2, 4'-diphenylmethane diisocyanate.
Examples of dicyclohexylmethane diisocyanate include dicyclohexylmethane 4,4'-diisocyanate.
The content of the "suitable isocyanate compound" mentioned above in the isocyanate component is preferably 80 mass% or more, more preferably 90 mass% or more, and still more preferably 95 mass% or more and 100 mass% or less.

(Active Hydrogen-Containing Compound Component)

Examples of active hydrogen-containing compound components include a polythiol component, a polyol component, or a polyamine component.

(Polythiol Component)

Examples of polythiol components include an ester compound of a polyol compound and a mercapto group-containing carboxylic acid compound, a linear or branched aliphatic polythiol compound, a polythiol compound having an aliphatic ring, and a polythiol compound having an aromatic ring.

In the ester compound of a polyol compound and a mercapto group-containing carboxylic acid compound, examples of polyol compounds include compounds having two or more hydroxyl groups in a molecule. Here, examples of polyol compounds include ethylene glycol, diethylene glycol, propanediol, propanetriol, butanediol, trimethylolpropane, bis(2-hydroxyethyl) disulfide, pentaerythritol, and dipentaerythritol.

Examples of mercapto group-containing carboxylic acid compounds include thioglycolic acid, mercaptopropionic acid, a thiolactic acid compound, and thiosalicylic acid.

Examples of ester compounds of a polyol compound and a mercapto group-containing carboxylic acid compound include ethylene glycol bis(2-mercaptoacetate), ethylene glycol bis(3-mercaptopropionate), diethylene glycol bis(2-mercaptoacetate), diethylene glycol bis(3-mercaptopropionate), 1,4-butanediol bis(2-mercaptoacetate), 1,4-butanediol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), dipentaerythritol hexakis(2-mercaptoacetate), and dipentaerythritol hexakis(3-mercaptopropionate).

Examples of linear or branched aliphatic polythiol compounds include 1,2-ethanedithiol, 1,1-propanedithiol, 1,2-propanedithiol, 1,3-propanedithiol, 2,2-propanedithiol, 1,6-hexanedithiol, 1,2,3-propanetrithiol, 2,2-dimethylpropane-1,3-dithiol, 3,4-dimethyloxybutane-1,2-dithiol, 2,3-dimercapto-1-propanol, 1,2-dimercaptopropyl methyl ether, 2,3-dimercaptopropyl methyl ether, dimercaptoethyl ether, 2-(2-mercaptoethylthio)propane-1,3-dithiol, 2,2-bis(mercaptomethyl)-1,3-propanedithiol, bis(mercaptomethylthio)methane, tris(mercaptomethylthio)methane, bis(2-mercaptoethylthio)methane, 1,2-bis(mercaptomethylthio)ethane, 1,2-bis(2-mercaptoethylthio)ethane, 1,3-bis(mercaptomethylthio)propane, 1,3-bis(2-mercaptoethylthio)propane, 1,1,2,2-tetrakis(mercaptoethylthio)ethane, 1,1,3,3-tetrakis(mercaptoethylthio)propane, 3-mercaptomethyl-1,5-dimercapto-2,4-dithiapentane, tetrakis(mercaptoethylthio)propane, bis(2-mercaptoethyl)ether, bis(2-mercaptoethyl) sulfide, bis(2-mercaptoethyl) disulfide, 1,2-bis(2-mercaptoethylthio)-3-mercaptopropane, 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.

Examples of polythiol compounds having an aliphatic ring include 1,1-cyclohexanedithiol, 1,2-cyclohexanedithiol, methylcyclohexanedithiol, bis(mercaptomethyl)cyclohexane, 2-(2,2-bis(mercaptomethylthio)ethyl)-1,3-dithietane, 2,5-bis(mercaptomethyl)-1,4-dithiane, and 4,8-bis(mercaptomethyl)-1,3-dithiane.

Examples of polythiol compounds having an aromatic ring include 1,3-dimercaptobenzene, 1,4-dimercaptobenzene, 1,3-bis(mercaptomethyl)benzene, 1,4-bis(mercaptomethyl)benzene, 1,3-bis(mercaptoethyl)benzene, 1,4-bis(mercaptoethyl)benzene, 1,3,5-trimercaptobenzene, 1,3,5-tris(mercaptomethyl)benzene, 1,3,5-tris(mercaptoethyl)benzene, 4,4'-dimercaptobiphenyl, 4,4'-dimercaptobibenzyl, 2,5-toluenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracenedimethanethiol, 1,3-di(p-methyloxyphenyl)propane-2,2-dithiol, 1,3-diphenylpropane-2,2-dithiol, phenylmethane-1,1-dithiol, and 2,4-di(p-mercaptophenyl)pentane.

These may be used alone, or two or more thereof may be used in combination.

(Polyol Component)

Examples of polyol components include ethylene glycol, diethylene glycol, propanediol, propanetriol, butanediol, trimethylolpropane, bis(2-hydroxyethyl) disulfide, pentaerythritol, and dipentaerythritol.

(Polyamine Component)

Examples of polyamine components include polymethylenediamine, polyetherdiamine, diethylenetriamine, iminobis(propylamine), bis(hexamethylenetriamine), diethylenetriamine, tetraethylenepentamine, pentaethylenehexamine, pentaethylenehexamine, dimethylaminopropylamine, aminoethylethanolamine, methyliminobis(propylamine), diaminomethane, N-aminomethylpiperazine, 1,3-diaminocyclohexane, isophoronediamine, m-xylenediamine, tetrachloro-p-xylenediamine, m-phenylenediamine, 4,4'-methylenedianiline, diaminodiphenylsulfone, benzidine, diaminodiphenyl ether, 4,4'-thiodianiline, 4,4'-bis(o-toluidine)dianisidine, o-phenylenediamine, 2,4-toluenediamine, 2,5-toluenediamine, methylenebis(o-chloroaniline), diaminoditolyl sulfone, bis(3,4-diaminophenyl) sulfone, 2,6-diaminopyridine, 4-chloro-o-phenylenediamine, 4-methoxy-6-methyl-m-phenylenediamine, m-aminobenzylamine, N,N,N',N'-tetramethyl-1,3-butanediamine, N,N,N',N'-tetramethyl-p-phenylenediamine, tetramethylguanidine, 2-dimethylamino-2-hydroxypropane,

pyrazine, 2,4,6-tris(dimethylaminomethylol)phenol, N-methylpiperazine, N-β-(aminoethyl)-γ-aminopropyltrimethoxysilane, N-β(aminoethyl)γ-aminopropylmethyldimethoxysilane, and γ-aminopropylmethyldimethoxysilane.

The active hydrogen-containing compound component preferably include at least one selected from the group consisting of toluenediamine, pentaerythritol tetrakis(mercaptoacetate), pentaerythritol tetrakis(mercaptopropionate), trimethylolpropane tris(mercaptoacetate), trimethylolpropane tris(mercaptopropionate), bis(mercaptoethylthio)mercaptopropane, bis(mercaptomethyl)-3,6,9-trithiaundecanedithiol, dimercaptoethyl sulfide, bis(mercaptomethyl)dithiane, dimercaptoethyl ether, and diethylene glycol.

Examples of toluenediamine include 2,4-toluenediamine and 2,5-toluenediamine.

Examples of pentaerythritol tetrakis(mercaptoacetate) include pentaerythritol tetrakis(2-mercaptoacetate).

Examples of pentaerythritol tetrakis(mercaptopropionate) include pentaerythritol tetrakis(3-mercaptopropionate).

Examples of trimethylolpropane tris(mercaptoacetate) include trimethylolpropane tris(2-mercaptoacetate).

Examples of trimethylolpropane tris(mercaptopropionate) include trimethylolpropane tris(3-mercaptopropionate).

Examples of bis(mercaptoethylthio)mercaptopropane include 1,2-bis(2-mercaptoethylthio)-3-mercaptopropane.

Examples of bis(mercaptomethyl)-3,6,9-trithiaundecanedithiol include 4,7-bis(mercaptomethyl)-3,6,9-trithiaundecane-1,11-dithiol, 4,8-bis(mercapto methyl)-3,6,9-trithiaundecane-1,11-dithiol, 5,7-bis(mercapto methyl)-3,6,9-trithiaundecane-1,11-dithiol. Bis(mercaptomethyl)-3,6,9-trithiaundecanedithiol is preferably a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.

The active hydrogen-containing compound component is preferably a polythiol component.

The polythiol component

preferably includes at least one selected from the group consisting of 2,5-bis(mercaptomethyl)-1,4-dithiane, pentaerythritol tetrakis(2-mercaptoacetate), pentaerythritol tetrakis(3-mercaptopropionate), 4-mercaptomethyl-1,8-dimercapto-3,6-dithiaoctane, 4,7-bis(mercaptomethyl)-3,6,9-trithiaundecane-1,11-dithiol, 4,8-bis(mercaptomethyl)-3,6,9-trithiaundecane-1,11-dithiol, 5,7-bis(mercaptomethyl)-3,6,9-trithiaundecane-1,11-dithiol, trimethylolpropane tris(2-mercaptoacetate), trimethylolpropane tris(3-mercaptopropionate), butanediol bis(2-mercaptoacetate), butanediol bis(3-mercaptopropionate), dipentaerythritol hexakis(2-mercaptoacetate), and dipentaerythritol hexakis(3-mercaptopropionate);

more preferably includes at least one selected from the group consisting of 4,7-bis(mercaptomethyl)-3,6,9-trithiaundecane-1,11-dithiol, 4,8-bis(mercaptomethyl)-3,6,9-trithiaundecane-1,11-dithiol, 5,7-bis(mercaptomethyl)-3,6,9-trithiaundecane-1,11-dithiol, 4-mercaptomethyl-1,8-dimercapto-3,6-dithiaoctane, pentaerythritol tetrakis(3-mercaptopropionate), 2,5-bis(mercaptomethyl)-1,4-dithiane, and pentaerythritol tetrakis(2-mercaptoacetate);

still more preferably includes at least one selected from the group consisting of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol; and

even more preferably includes a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.

The amount of the preferable polythiol components mentioned above is preferably 50 mass% or more, more preferably 70 mass% or more, still more preferably 90 mass% or more, and even more preferably 95 mass% or more, and 100 mass% or less in the polythiol component.

The equivalent ratio (mercapto groups/isocyanato groups) between the mercapto groups of the polythiol component and the isocyanato group of the polyisocyanate component is preferably 40/60 or more, more preferably 43/57 or more, and still more preferably 45/55 or more, and preferably 60/40 or less, more preferably 55/45 or less, and still more preferably 53/47 or less.

The total amount of the polythiol component and the polyisocyanate component is preferably 80 mass% or more, more preferably 90 mass% or more, and still more preferably 95 mass% or more, and 100 mass% or less in the polymerizable composition.

(Episulfide Resin)

The episulfide resin is a cured product of a polymerizable composition of an epithio compound. Here, the polymerizable composition may contain other monomers.

(Epithio Compound)

The epithio compound is a compound having an episulfide group (an epithio group).

Examples of epithio compounds include an episulfide compound having a linear or branched aliphatic skeleton, an episulfide compound having an alicyclic skeleton, an episulfide compound having an aromatic skeleton, and an episulfide compound having a dithiane ring skeleton.

Examples of episulfide compounds having a linear or branched aliphatic skeleton include bis(β-epithiopropyl) sulfide, bis(β-epithiopropyl) disulfide, 2-(2-β-epithiopropylthioethylthio)-1,3-bis(β-epithiopropylthio)propane, 1,2-bis[(2-β-epithiopropylthioethyl)thio]-3-(β-epithiopropylthio)propane, tetrakis(β-epithiopropylthiomethyl)methane, and 1,1,1-tris(β-epithiopropylthiomethyl)propane.

Examples of episulfide compounds having an alicyclic skeleton include 1,3-bis(β-epithiopropylthio)cyclohexane, 1,4-bis(β-epithiopropylthio)cyclohexane, 1,3-bis(β-epithiopropylthiomethyl)cyclohexane, 1,4-bis(β-epithiopropylthiomethyl)cyclohexane, bis[4-(β-epithiopropylthio)cyclohexyl]methane, 2,2-bis[4-(β-epithiopropylthio)cyclohexyl]propane, and bis[4-(β-epithiopropylthio)cyclohexyl]sulfide.

Examples of episulfide compounds having an aromatic skeleton include 1,3-bis(β-epithiopropylthio)benzene, 1,4-bis(β-epithiopropylthio)benzene, 1,3-bis(β-epithiopropylthiomethyl)benzene, 1,4-bis(β-epithiopropylthiomethyl)benzene, bis[4-(β-epithiopropylthio)phenyl]methane, 2,2-bis[4-(β-epithiopropylthio)phenyl]propane, bis[4-(β-epithiopropylthio)phenyl]sulfide, bis[4-(β-epithiopropylthio)phenyl]sulfine, and 4,4-bis(β-epithiopropylthio)biphenyl.

Examples of episulfide compounds having a dithiane ring skeleton include 2,5-bis(β-epithiopropylthiomethyl)-1,4-dithiane, 2,5-bis(β-epithiopropylthioethylthiomethyl)-1,4-dithiane, 2,5-bis(β-epithiopropylthioethyl)-1,4-dithiane, and 2,3,5-tri(β-epithiopropylthioethyl)-1,4-dithiane.

In addition to the epithio compound, other polymerizable components such as the polyisocyanate component and the polythiol component, which were mentioned above, may be added.

Among these, an episulfide compound having a linear or branched aliphatic skeleton is preferred, and bis(β-epithiopropyl) sulfide or bis(β-epithiopropyl) disulfide are more preferred.

The content of the epithio compound is preferably 50 mass% or more, more preferably 60 mass% or more, still more preferably 70 mass% or more, even more preferably 80 mass% or more, and further preferably 90 mass% or more, and preferably 98 mass% or less and more preferably 96 mass% or less in the polymerizable composition.

It is preferred that the polymerizable composition further contains sulfur or a polythiol compound in combination with an epithio compound.

The content of sulfur is preferably 1 mass% or more, more preferably 5 mass% or more, and still more preferably 10 mass% or more, and preferably 30 mass% or less and more preferably 20 mass% or less in the polymerizable composition.

Examples of polythiol compounds include the compounds listed above.

When a polythiol compound is used in combination with an epithio compound, the content of the polythiol compound is preferably 2 mass% or more and more preferably 4 mass% or more, and preferably 50 mass% or less, more preferably 40 mass% or less, still more preferably 30 mass% or less, even more preferably 20 mass % or less, and further preferably 10 mass% or less in the polymerizable components.

When the polymerizable composition contains a polyisocyanate component and a polythiol component, or an epithio compound, the composition preferably contains a polymerization catalyst.

Examples of polymerization catalysts include tin compounds and nitrogen-containing compounds.

Examples of tin compounds include alkyltin compounds and alkyltin halide compounds.

Examples of alkyltin compounds include dibutyltin diacetate and dibutyltin dilaurate.

Examples of alkyltin halide compounds include dibutyltin dichloride, dimethyltin dichloride, monomethyltin trichloride, trimethyltin chloride, tributyltin chloride, tributyltin fluoride, and dimethyltin dibromide.

Among these, dibutyltin diacetate, dibutyltin dilaurate, dibutyltin dichloride, and dimethyltin dichloride are preferred, and dimethyltin dichloride is more preferred.

Examples of nitrogen-containing compounds include a tertiary amine, a quaternary ammonium salt, an imidazole-based compound, and a pyrazole-based compound. The tertiary amine is preferably a hindered amine.

Examples of tertiary amines include triethylamine, tri-n-propylamine, triisopropylamine, tri-n-butylamine, triisobutylamine, N,N-dimethylbenzylamine, N-methylmorpholine, N,N-dimethylcyclohexylamine, pentamethyldiethylenetriamine, bis(2-dimethylaminoethyl) ether, N-methylmorpholine, N,N'-dimethylpiperazine, N,N,N',N'-tetramethylethylenediamine, and 1,4-diazabicyclo[2.2.2]octane (DABCO).

Examples of hindered amines include 1,2,2,6,6-pentamethyl-4-piperidinol, 1,2,2,6,6-pentamethyl-4-hydroxyethyl-4-piperidinol, methyl-1,2,2,6,6-pentamethyl-4-piperidyl sebacate, a mixture of methyl-1,2,2,6,6-pentamethyl-4-piperidyl sebacate and bis(1,2,2,6,6-pentamethyl-4-piperidyl) sebacate, bis(1,2,2,6,6-pentamethyl-4-piperidyl) sebacate, bis(2,2,6,6-tetramethyl-1-(octyloxy)-4-piperidyl) sebacate, bis(1,2,2,6,6-pentamethyl-4-piperidyl)[[3,5-bis(1,1-dimethylethyl)-4-hydroxyphenyl]methyl]butyl malonate, and tetrakis(1,2,2,6,6-pentamethyl-4-piperidyl)butane-1,2,3,4-tetracarboxylate.

Examples of quaternary ammonium salts include tetraethylammonium hydroxide.

Examples of imidazole-based compounds include imidazole, 1-methyl-2-mercapto-1H-imidazole, 1,2-dimethyl imidazole, benzyl methyl imidazole, and 2-ethyl-4-imidazole.

Examples of pyrazole-based compounds include pyrazole and 3,5-dimethylpyrazole.

Among these, a tertiary amine such as a hindered amine, an imidazole-based compound, and a pyrazole-based compound are preferred, an imidazole-based compound is more preferred, and 1-methyl-2-mercapto-1H-imidazole is still more preferred.

When the polymerizable composition contains an isocyanate component and an active hydrogen-containing compound component, the amount of polymerization catalysts added in the polymerizable composition is preferably 0.001 parts by mass or more, more preferably 0.005 parts by mass or more, and still more preferably 0.007 parts by mass or more, and more preferably 2 parts by mass or less, more preferably 1 part by mass or less, and still more preferably 0.5 parts by mass or less in relation to 100 parts by mass of the total amount of the isocyanate component and the active hydrogen-containing compound component.

When the polymerizable composition contains an epithio compound, the amount of polymerization catalysts added in the polymerizable composition is preferably 0.001 parts by mass or more, more preferably 0.005 parts by mass or more, and still more preferably 0.007 parts by mass or more, and more preferably 2 parts by mass or less, more preferably 1 part by mass or less, and still more preferably 0.5 parts by mass or less in relation to 100 parts by mass of the total amount of polymerizable components.

(Polycarbonate Resin)

The polycarbonate resin is preferably a cured product of a polymerizable composition containing diethylene glycol bis(allyl carbonate).

Monomers preferably include a monomer having two or more polymerizable unsaturated bonds in a molecule in order to obtain a three dimensionally-crosslinked optical resin.

Examples of polymerizable unsaturated bonds include a (meth)acrylate group, an allyl group, a vinyl group, and the like. It should be noted that a (meth)acrylate group is at least one selected from a methacrylate group and an acrylate group.

Among these, preferably, at least one selected from the group consisting of a methacrylate group and an allyl group is preferred.

As the monomer having two or more polymerizable unsaturated bonds in a molecule, diethylene glycol bis(allyl carbonate) is preferably included, and diethylene glycol bis(allyl carbonate), benzyl methacrylate, diallyl phthalate, and alkyl methacrylates having 1 to 4 carbon atoms in the alkyl group are more preferably included.

The mixing amount of diethylene glycol bis(allyl carbonate) is preferably 5 mass% or more, more preferably 10 mass% or more, and still more preferably 20 mass% or more, and preferably 100 mass% or less, more preferably 80 mass% or less, still more preferably 50 mass% or less, and even more preferably 40 mass% or less in relation to the total amount of monomers.

When diethylene glycol bis(allyl carbonate) is used in combination with benzyl methacrylate, diallyl phthalate, and alkyl methacrylates having 1 to 4 carbon atoms in the alkyl group, the mixing amount of the diethylene glycol bis(allyl carbonate) is more preferably 5 mass% or more, still more preferably 10 mass% or more, and even more preferably 20 mass% or more, and more preferably 40 mass% or less and still more preferably 35 mass% or less in relation to the total amount of monomers.

The mixing amount of benzyl methacrylate is preferably 5 mass% or more, more preferably 10 mass% or more, and still more preferably 15 mass% or more, and preferably 40 mass% or less, more preferably 30 mass% or less, and still more preferably 25 mass% or less in relation to the total amount of monomers.

As a diallyl phthalate, one or two selected from the group consisting of diallyl isophthalate and diallyl terephthalate may be mentioned.

The mixing amount of diallyl phthalate is preferably 14 mass% or more, more preferably 20 mass% or more, and still more preferably 30 mass% or more, and preferably 88 mass% or less, more preferably 70 mass% or less, and still more preferably 60 mass% or less in relation to the total amount of monomers.

Examples of alkyl methacrylates having 1 to 4 carbon atoms in the alkyl group include at least one selected from the group consisting of methyl methacrylate, ethyl methacrylate, n-propyl methacrylate, isopropyl methacrylate, n-butyl methacrylate, sec-butyl methacrylate, iso-butyl methacrylate, and tert-butyl methacrylate.

The content of the alkyl methacrylate is preferably 1 mass% or more, more preferably 2 mass% or more, and still more preferably 3 mass% or more, and preferably 6 mass% or less and more preferably 5 mass% or less in relation to the total amount of monomers.

Examples of radical initiators used in polymerization include 1,1-azobis(cyclohexanecarbonate), diisopropyl

peroxycarbonate, 1,1'-azobis(cyclohexanenitrate), di-tert-butyl peroxide, and the like.

The mixing amount of the radical initiator is preferably 0.1 parts by mass or more, more preferably 0.5 parts by mass or more, and still more preferably 1.0 part by mass or more, and preferably 10 parts by mass or less, more preferably 8 parts by mass or less, and still more preferably 5 parts by mass or less in relation to 100 parts by mass of monomers.

(Acrylic Resin)

An acrylic resin is a cured product of a polymerizable composition containing an acrylic compound. Here, the polymerizable composition may contain other monomers.

Examples of acrylic compounds include a multifunctional (meth)acrylate compound having an aromatic ring, polyalkylene glycol di(meth)acrylate, a monofunctional acrylate, and the like.

Among these, it is preferred to include a multifunctional (meth)acrylate compound having an aromatic ring and polyalkylene glycol di(meth)acrylate.

Examples of multifunctional (meth)acrylate compounds having an aromatic ring include an alkylene oxide-modified bisphenol A having (meth)acryloyl groups at both ends and alkylene oxide-modified and urethane-modified bisphenol A having (meth)acryloyl groups at both ends.

Among these, an alkylene oxide-modified bisphenol A having (meth)acryloyl groups at both ends is preferred.

A preferable example of the alkylene oxide-modified bisphenol A having (meth)acryloyl groups at both ends is preferably a compound represented by formula (2):

[C5]

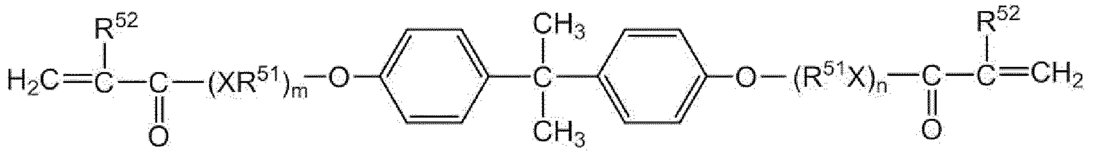

(2)

wherein $R^{51}$ is an ethylene group or a propylene group; $R^{52}$ is hydrogen or a methyl group; X is an oxygen or sulfur atom and preferably an oxygen atom; m and n each represent an average number of moles added; and m+n is 1.5 to 6 and preferably 2 to 4.

Examples of alkylene oxide-modified bisphenol A having (meth)acryloyl groups at both ends include 2,2-bis[4-[2-((meth)acryloyloxy)ethoxy]phenyl]propane and 2,2-bis[4-[2-((meth)acryloyloxy)ethoxy]-3,5-dibromophenyl]propane.

The content of the multifunctional (meth)acrylate compound having an aromatic ring is preferably 40 mass% or more, more preferably 50 mass% or more, and still more preferably 55 mass% or more, and preferably 90 mass% or less, more preferably 80 mass% or less, and still more preferably 70 mass% or less in the polymerizable composition.

Examples of polyalkylene glycol di(meth)acrylate include diethylene glycol di(meth)acrylate, triethylene glycol di(meth)acrylate, tetraethylene glycol di(meth)acrylate, dipropylene glycol di(meth)acrylate, tripropylene glycol di(meth)acrylate, tetrapropylene glycol di(meth)acrylate, dibuthylene glycol di(meth)acrylate, tributhylene glycol di(meth)acrylate, and tetrabuthylene glycol di(meth)acrylate.

The content of the polyalkylene glycol di(meth)acrylate is preferably 10 mass% or more, more preferably 20 mass% or more, and still more preferably 30 mass% or more, and preferably 60 mass% or less, more preferably 50 mass% or less, and still more preferably 45 mass% or less in the polymerizable composition.

Examples of monofunctional (meth)acrylates include phenyl (meth)acrylate, benzyl (meth)acrylate, phenoxyethyl (meth)acrylate, 3-phenoxy-2-hydroxypropyl (meth)acrylate, 2-phenyl phenyl (meth)acrylate, 4-phenylphenyl (meth)acrylate, 3-(2-phenylphenyl)-2-hydroxypropyl (meth)acrylate, 3-(4-phenylphenyl)-2-hydroxypropyl (meth)acrylate, 1-naphthyloxyethyl (meth)acrylate, 2-naphthyloxyethyl (meth)acrylate, 2,4,6-tribromophenyl (meth)acrylate, 2,4,6-tribromophenoxyethyl (meth)acrylate, 2,4,6-tribromophenyl-di(oxyethyl) (meth)acrylate, and 2,4,6-tribromobenzyl (meth)acrylate.

The total amount of polymerizable components is preferably 80 mass% or more, more preferably 85 mass% or more, and still more preferably 90 mass% or more, and preferably 99 mass% or less and more preferably 95 mass% or less in the polymerizable composition.

When the polymerizable composition contains an acrylic compound, the composition preferably contains a radical polymerization initiator.

Examples of radical polymerization initiators include energy ray-sensitive polymerization initiators and heat-sensitive polymerization initiators.

Examples of energy ray-sensitive polymerization initiators include 2-hydroxy-2-methyl-1-phenylpropan-1-one, hydroxycyclohexyl phenyl ketone, methyl phenylglyoxylate, and 2,4,6-trimethylbenzoyldiphenylphosphine oxide.
Examples of heat-sensitive polymerization initiators include organic peroxide and azo compounds.
Examples of organic peroxide include peroxy esters such as tert-butyl peroxyneodecanoate, tert-butyl peroxypivalate, tert-butyl peroxyisobutyrate, tert-butyl peroxyacetate, cumyl peroxyneodecanoate, tert-butyl peroxyoxtoate, tert-butyl peroxyisopropylcarbonate, cumyl peroxyoxtoate, tert-hexyl peroxyneodecanoate, tert-hexyl peroxypivalate, and tert-butyl peroxyneohexanoate; peroxy ketals such as 1,1-bis(tert-butyl peroxy)-3,3,5-trimethylcyclohexane, 1,1-bis(tert-butylperoxy) cyclohexane, 2,2-bis(tert-butylperoxy)octane, and 2,2-bis(tert-butylperoxy)butane; diacyl peroxides such as acetyl peroxide, isobutyryl peroxide, octanoyl peroxide, lauroyl peroxide, benzoyl peroxide, and m-toluoyl peroxide; and peroxydicarbonates such as diisopropyl peroxydicarbonate and di-n-propyl peroxydicarbonate.
Examples of azo compounds include 2,2'-azobisisobutyronitrile, 1,1'-azobis(cyclohexane-1-carbonitrile), 2,2'-azobis(2-methylbutyronitrile), 2,2'-azobis(2,4-dimethylvaleronitrile), dimethyl 2,2'-azobis(isobutyrate), and 2,2'-azobis(2,4,4-trimethylpentane).
The amount of the radical polymerization initiator added is preferably 0.01 parts by mass or more, more preferably 0.1 parts by mass or more, still more preferably 0.5 parts by mass or more, and preferably 10 parts by mass or less, more preferably 5 parts by mass or less, and still more preferably 3 parts by mass or less in relation to 100 parts by mass of the total amount of acrylic compounds.
The lens substrate may include other additives such as a release agent, a coloring agent, an antioxidant, a coloring prevention agent, and a fluorescent whitening agent. These may be used alone, or two or more thereof may be used in combination.

(Release Agent)

Examples of release agents include phosphate ester compounds such as isopropyl acid phosphate, butyl acid phosphate, octyl acid phosphate, nonyl acid phosphate, decyl acid phosphate, isodecyl acid phosphate, isodecyl acid phosphate, tridecyl acid phosphate, stearyl acid phosphate, propylphenyl acid phosphate, butylphenyl acid phosphate, butoxyethyl acid phosphate, and the like. The phosphoric acid ester compound may be either a phosphoric acid monoester compound or a phosphoric acid diester compound, but it is preferably a mixture of a phosphate monoester compound and a phosphate diester compound.
The amount of the release agent added is preferably 0.01 part by mass or more, and more preferably 0.05 parts by mass or more, and preferably 1.00 part by mass or less, and more preferably 0.50 parts by mass or less in relation to 100 parts by mass of the total amount of resins.

[Coloring Agent]

The lens substrate may contain a coloring agent within the range that does not impair the luminous transmittance, which will be described later.
From the viewpoint of making the coloring due to the addition of the compound 1 less noticeable, the lens substrate may contain a coloring agent L having a largest maximum absorption wavelength within the range of 550 nm or more and 600 nm or less in a 20-ppm by mass toluene solution (hereinafter also simply referred to as "coloring agent L").
From the viewpoint of making the coloring due to the addition of the compound 1 less noticeable, the lens substrate may contain a coloring agent S having a largest maximum absorption wavelength within the range of 500 nm or more and less than 550 nm in a 20-ppm by mass toluene solution (hereinafter also simply referred to as "coloring agent S").

(Coloring Agent L)

From the viewpoint of obtaining a lens substrate with a slightly bluish and good color tone, the coloring agent L has a largest maximum absorption wavelength of 550 nm or more and 600 nm or less in a 20-ppm by mass toluene solution. The 20-ppm by mass toluene solution means a ratio of a solute to the total toluene solution.
From the viewpoint of obtaining a lens substrate with a slightly bluish and good color tone, the largest maximum absorption wavelength of the coloring agent L is preferably 550 nm or more, more preferably 560 nm or more, and still more preferably 580 nm or more. From the viewpoint of obtaining a resin composition with a slightly bluish and good color tone, the largest maximum absorption wavelength of the coloring agent L is preferably 600 nm or less, and more preferably 590 nm or less.
Examples of the coloring agent L include C.I.Solvent Violet 11, 13, 14, 26, 31, 33, 36, 37, 38, 45, 47, 48, 51, 59, and 60; C.I.Disperse Violet 26, 27, and 28. Among these, C.I.Disperse Violet 27 and C.I.Solvent Red 13 and 31 are preferable, and from the viewpoint of high stability and small changes in color tone in the polymerization of the polymerizable composition, C.I.Disperse Violet 27, C.I.Solvent Violet 13 is more preferred, and C.I.Disperse Violet 27 is still more preferred.

From the viewpoint of obtaining a lens substrate with a slightly bluish and good color tone, the amount of the coloring agent L added is preferably 10,000 ppb by mass or less, more preferably 3,000 ppb by mass or less, and still more preferably 1,500 ppb by mass or less in relation to resins. From the viewpoint of obtaining a lens substrate with a slightly bluish and good color tone, the amount of the coloring agent L added is preferably 200 ppb by mass or more, more preferably 300 ppb by mass or more, and still more preferably 400 ppb by mass or more.

(Coloring Agent S)

From the viewpoint of obtaining a lens substrate with a slightly bluish and good color tone, the coloring agent S has a largest maximum absorption wavelength of 500 nm or more and less than 550 nm in a 20-ppm by mass toluene solution.

From the viewpoint of obtaining a lens substrate with a slightly bluish and good color tone, the largest maximum absorption wavelength of the coloring agent S is preferably 500 nm or more, more preferably 510 nm or more, and still more preferably 530 nm or more. Further, from the viewpoint of obtaining a lens substrate with a slightly bluish and good color tone, the largest maximum absorption wavelength of the coloring agent L is preferably 545 nm or less.

From the viewpoint of obtaining a lens substrate with a slightly bluish and good color tone, examples of the coloring agent S include C.I.Solvent Red 24, 49, 52, 90, 91, 111, 118, 119, 122, 124, 125, 127, 130, 132, 143, 145, 146, 150, 151, 155, 160, 168, 169, 172, 175, 181, 207, 218, 222, 227, 230, 245, and 247; and C.I.Acid Red 73, 80, 91, 92, 97, 138, 151, 211, 274, and 289. Among these, C.I.Solvent Red 52 and 146 are preferred, and from the viewpoint of high stability and small changes in color tone in the polymerization of the polymerizable composition, C.I.Solvent Red 52 is more preferred.

From the viewpoint of obtaining a lens substrate with a slightly bluish and good color tone, the amount of the coloring agent S added is preferably 500 ppb by mass or less, more preferably 100 ppb by mass or less, and still more preferably 50 ppb by mass or more in relation to the resin. From the viewpoint of obtaining a lens substrate with a slightly bluish and good color tone, the amount of the coloring agent S added is preferably 1 ppb by mass or more, more preferably 3 ppb by mass or more, and still more preferably 5 ppb by mass or more.

From the viewpoint of obtaining a lens substrate with a slightly bluish and good color tone, the mass ratio between the coloring agent L and the coloring agent S [(mass of coloring agent L)/(mass of coloring agent S)] is 5 or more and 500 or less.

The mass ratio of the coloring agent L and the coloring agent S is preferably 5 or more, more preferably 10 or more, still more preferably 15 or more, and even more preferably 20 or more. The mass ratio of the coloring agent L and the coloring agent S is preferably 500 or less, more preferably 200 or less, still more preferably 100 or less, and even more preferably 80 or less.

<Structure, etc., of Lens Substrate>

The lens substrate may be either a finished lens or a semi-finished lens.

The surface shape of the lens substrate is not particularly limited and may be any of a flat surface, a convex surface, a concave surface, or the like.

The lens substrate may be used for any purpose, such as single vision lenses, multifocal lenses, progressive power lenses, etc. For example, as an example, regarding a progressive power lens, a near portion region (near portion) and a progressive portion region (intermediate region) are normally included in the lower region as described above, and a distance portion region (distance portion) is normally included in an upper region.

As the lens substrate, a colorless substrate is usually used, but a colored one can be used as long as transparency is not impaired.

The lens substrate is preferably a meniscus type. The "meniscus-type" lens substrate means a lens substrate in which curved surfaces are formed on both surfaces. A meniscus-type lens substrate containing the compound 1 described above can suppress astigmatism.

Although not particularly limited, the optical center thickness of the lens substrate is preferably 0.5 mm or more and 10.0 mm or less, more preferably 0.5 mm or more and 5.0 mm or less, still more preferably 0.5 mm or more and 3.0 mm or less, and further preferably 0.5 mm or more and 2.0 mm or less.

The diameter of the lens substrate is not particularly limited and generally about 50 to 100 mm.

The refractive index ne of the lens substrate is preferably 1.52 or more, more preferably 1.53 or more, still more preferably 1.55 or more, even more preferably 1.58 or more, and further preferably 1.60 or more.

From the viewpoint of enhancing the effect of improving Abbe's number by including the compound 1, the refractive index ne of the lens substrate is preferably 1.70 or more and more preferably 1.74 or more.

The refractive index ne of the lens substrate is not particularly limited and, for example, 1.80 or less.

From the viewpoint of reducing the blue light hazard, the transmittance of light with a wavelength of 410 nm in the lens substrate is preferably 5% or less, more preferably 3% or less, and still more preferably 1.0% or less. The lower limit of the transmittance of light with a wavelength of 410 nm is not particularly limited and, for example, 0.0% or more.

The transmittance of light with a wavelength of 430 nm in the lens substrate is preferably 70% or more, more preferably 72% or more, and still more preferably 75% or more. A lens substrate that has a transmittance of light with a wavelength of 410 nm mentioned above and also has a transmittance of light with a wavelength of 430 nm as above can suppress coloring or save the amount used of the dyeing agent described above while reducing the blue light hazard. The upper limit of the transmittance of light with a wavelength of 430 nm is not particularly limited and, for example, 90% or less.

From the viewpoint of reducing the transmission of UV rays that are harmful to the eyes, the transmittance of light with a wavelength of 400 nm in the lens substrate is preferably 3% or less, more preferably 1% or less, and still more preferably 0.0% or less.

The transmittance of light of a wavelength of 420 nm in the lens substrate is preferably 50% or less, more preferably 30% or less, and still more preferably 20% or less. A lens substrate that has a transmittance of light with a wavelength of 410 nm mentioned above and also has a transmittance of light with a wavelength of 420 nm as above can reduce the blue light hazard. The lower limit of the transmittance of light with a wavelength of 420 nm is not particularly limited and, for example, 0% or more.

The transmittance of light with a wavelength of 440 nm in the lens substrate is preferably 70% or more, more preferably 72% or more, and still more preferably 75% or more. A lens substrate that has a transmittance of light with a wavelength of 440 nm as above can suppress coloring or save the amount used of the dyeing agent described above. The upper limit of the transmittance of light with a wavelength of 440 nm is not particularly limited and, for example, 95% or less.

The transmittance of light with a wavelength of 450 nm in the lens substrate is preferably 70% or more, more preferably 72% or more, and still more preferably 75% or more. A lens substrate that has a transmittance of light with a wavelength of 450 nm as above can suppress coloring or the amount used of the dyeing agent described above. The upper limit of the transmittance of light with a wavelength of 450 nm is not particularly limited and, for example, 95% or less.

The transmittance of light with a wavelength of 550 nm in the lens substrate is preferably 70% or more, more preferably 80% or more, and still more preferably 85% or more. The upper limit of the transmittance of light with a wavelength of 550 nm is not particularly limited and, for example, 95% or less.

The luminous transmittance of the lens substrate is preferably 70% or more, more preferably 80% or more, still more preferably 85% or more, and even more preferably 90% or more.

The upper limit of the luminous transmittance is not particularly limited and, for example, 100% or less and may be 95% or less.

The transmittance described above is a transmittance at the optical center of a lens substrate and can be measured using a spectrophotometer. As the spectrophotometer, for example, "U-4100" (trade name, manufactured by Hitachi, Ltd) may be used. The transmittance described above can be achieved by adjusting the content of the compound 1 according to the thickness of the lens substrate.

(Production Method of Lens Substrate)

Although not particularly limited, the lens substrate is obtained by, for example,

a step of curing the polymerizable composition described above and
a step of annealing a cured resin.

The polymerization is preferably performed by a cast polymerization method. The lens substrate can be obtained, for example, by injecting the polymerizable composition into a mold die which is a combination of a glass or metal mold and a tape or a gasket and performing polymerization.

The polymerization conditions can be appropriately set according to the polymerizable composition. The polymerization starting temperature is preferably 0°C or higher and more preferably 10°C or higher, and preferably 50°C or lower and more preferably 40°C or lower. It is preferable to raise the temperature from the polymerization starting temperature, and then perform heating, curing, and forming. For example, the raised maximum temperature is generally 110°C or higher and 130°C or lower.

After completion of the polymerization, the lens substrate may be released, and annealing treatment may be performed. The temperature of the annealing treatment is preferably 100°C to 150°C.

<Hard Coat Layer>

A hard coat layer is, for example, a cured film from a curable composition containing an inorganic oxide and a silicon compound. The curable composition preferably further includes a multifunctional epoxy compound.

Examples of inorganic oxides include silicon oxide, aluminum oxide, titanium oxide, zirconium oxide, tungsten oxide, zinc oxide, tin oxide, beryllium oxide, antimony oxide, and a composite oxide of two or more inorganic oxides among these. These may be used singly or in a combination of two or more thereof. Among these inorganic oxides, silicon oxide is preferred. Colloidal silica may be used as the inorganic oxide.

The content of inorganic oxides is preferably 20 mass% or more and 80 mass% or less, more preferably 25 mass% or more and 70 mass% or less, and still more preferably 25 mass% or more and 50 mass% or less in the solid contents in the curable composition.

A silicon compound is, for example, a silicon compound having a hydrolyzable group such as an alkoxy group. The silicon compound is preferably a silane coupling agent having an organic group that bonds to a silicon atom and a hydrolyzable group. The organic group that bonds to a silicon atom is preferably an organic group having a functional group, including an epoxy group such as a glycidoxy group, a vinyl group, a methacryloxy group, an acryloxy group, a mercapto group, an amino group, and a phenyl group and more preferably an organic group having an epoxy group. The silicon compound may have an alkyl group that bonds to silicon.

Examples of commercialized products of the silane coupling agent described above include the trade names KBM-303, KBM-402, KBM-403, KBE-402, KBE-403, KBM-1403, KBM-502, KBM-503, KBE-502, KBE-503, KBM-5103, KBM-602, KBM-603, KBM-903, KBE-903, KBE-9103, KBM-573, KBM-575, KBM-9659, KBE-585, KBM-802, KBM-803, KBE-846, KBE-9007, and the like, manufactured by Shin-Etsu Chemical Co., Ltd.

The content of the silicon compound is preferably 20 mass% or more and 90 mass% or less, more preferably 30 mass% or more and 75 mass% or less, and still more preferably 50 mass% or more and 75 mass% or less in the solid contents in the curable composition.

A multifunctional epoxy compound is a multifunctional epoxy compound having two or more epoxy groups in a molecule and more preferably, a multifunctional epoxy compound having two or three epoxy groups in a molecule. Examples of commercialized products of multifunctional epoxy compounds include the trade names "DENACOL" series EX-201, EX-211, EX-212, EX-252, EX-313, EX-314, EX-321, EX-411, EX-421, EX-512, EX-521, EX-611, EX-612, EX-614, EX-614B, and the like, manufactured by Nagase ChemteX Corporation.

The content of the multifunctional epoxy compound is preferably 0 mass% or more and 50 mass% or less, more preferably 10 mass% or more and 40 mass% or less, and still more preferably 15 mass% or more and 30 mass% or less in the solid contents in the curable composition.

The curable composition described above may be prepared by mixing the components as explained above and, if necessary, optional ingredients such as an organic solvent, a leveling agent, and a curing catalyst.

The hard coat layer described above may be formed by applying the curable composition to a substrate and curing the composition (by heat-curing, photo-curing, etc.). As means for applying the curable composition, commonly performed methods, such as a dipping method, a spin coating method, a spray method, and the like, can be applied. The curing of a curable composition containing a multifunctional epoxy compound is normally performed by heating. For example, curing by heating may be performed by placing a lens on which the curable composition described above is applied under an ambient temperature environment of 50°C to 150°C for about 30 minutes to 3 hours.

<Base Layer>

The base layer described above may be formed, for example, from a waterborne resin composition containing resin particles of at least one selected from the group consisting of a polyurethane resin, an acrylic resin, an epoxy resin, and the like.

As the waterborne resin composition described above, a commercially available waterborne polyurethane may be used as is, or, if necessary, after being diluted with a waterborne solvent. Examples of commercially available waterborne polyurethanes include the trade name "EVAFANOL" series manufactured by Nicca Chemical Co., Ltd., the trade name "SUPERFLEX" series manufactured by DKS CO. Ltd., the trade name "ADEKA BONTIGHTER" series manufactured by ADEKA Corporation, the trade name "OLESTAR" series manufactured by Mitsui Chemicals, Inc., the trade names "VONDIC" series and "HYDRAN" series manufactured by Dainippon Ink and Chemicals, Inc., the trade name "IMPRANIL" series manufactured by Bayer AG, the trade name "SOFLANNATE" series manufactured by Nippon Soflan Co., Ltd., the trade name "POIZ" series manufactured by Kao Corporation, the trade name "SANPLENE" series manufactured by Sanyo Chemical Industries Ltd., the trade name "AIZELAX" series manufactured by Hodogaya Chemical Co., Ltd., and the trade name "NeoRez" series manufactured by Zeneca Co., Ltd.

The base layer may be formed, for example, by applying the waterborne resin composition described above to a surface of a substrate and drying the composition.

<Functional Layer>

Examples of the functional layer described above include an anti-reflection layer, a UV ray absorbing layer, an infrared ray absorbing layer, a photochromic layer, an antistatic layer, and an anti-fogging layer. These functional layers may be used singly or in a combination of two or more thereof. A known technique relating to spectacle lenses can be applied to these functional layers. Among these, providing an anti-reflection layer is preferable.

(Anti-reflection Layer)

An anti-reflection layer has, for example, low refractive index layers and high refractive index layers arranged alternately. The number of layers in an anti-reflection layer is preferably 4 to 11 layers and, more preferably 5 to 8 layers.
The refractive index of the low refractive index layer is preferably from 1.35 to 1.80, and more preferably from 1.45 to 1.50 in the wavelengths within the range of 500 to 550 nm. The low refractive index layer is composed of inorganic oxides and preferably composed of silicon oxide.
The refractive index of the high refractive index layer is preferably from 1.90 to 2.60, and more preferably from 2.00 to 2.40 in the wavelengths within the range of 500 to 550 nm. The high refractive index layer is composed of, for example, an inorganic oxide. Inorganic oxide used in the high refractive index layer is preferably at least one selected from the group consisting of zirconium oxide, tantalum oxide, yttrium oxide, titanium oxide, niobium oxide, and aluminum oxide, and more preferably at least one selected from the group consisting of zirconium oxide and tantalum oxide.
The anti-reflection layer may be formed by alternately stacking low refractive index layers and high refractive index layers by vacuum deposition.

<Water Repellent Layer>

A water repellent layer is formed using a water repellent material composition, which will be described below. The water repellent layer may be formed on the hard coat layer or the functional layer, and preferably on the anti-reflection layer. It is preferred that the water repellent layer is preferably positioned on the outermost layer.

<Properties of Spectacle Lens>

From the viewpoint of reducing the blue light hazard, the transmittance of light with a wavelength of 410 nm in the entire spectacle lens is preferably 5% or less, more preferably 3% or less, and still more preferably 1.0% or less. The lower limit of the transmittance of light with a wavelength of 410 nm is not particularly limited and, for example, 0.0% or more.
The transmittance of light with a wavelength of 430 nm in the entire spectacle lens is preferably 70% or more, more preferably 72% or more, and still more preferably 75% or more. A lens substrate that has a transmittance of light with a wavelength of 410 nm mentioned above and also has a transmittance of light with a wavelength of 430 nm as above can suppress coloring or save the amount used of the dyeing agent described above while reducing the blue light hazard. The upper limit of the transmittance of light with a wavelength of 430 nm is not particularly limited and, for example, 90% or less.
From the viewpoint of reducing the transmission of UV rays that are harmful to the eyes, the transmittance of light with a wavelength of 400 nm in the entire spectacle lens is preferably 3% or less, more preferably 1% or less, and still more preferably 0.0% or less.
The transmittance of light of a wavelength of 420 nm in the entire spectacle lens is preferably 50% or less, more preferably 30% or less, and still more preferably 20% or less. A lens substrate that has a transmittance of light with a wavelength of 410 nm mentioned above and also has a transmittance of light with a wavelength of 420 nm as above can reduce the blue light hazard. The lower limit of the transmittance of light with a wavelength of 420 nm is not particularly limited and, for example, 0% or more.
The transmittance of light with a wavelength of 440 nm in the entire spectacle lens is preferably 70% or more, more preferably 72% or more, and still more preferably 75% or more. A lens substrate that has a transmittance of light with a wavelength of 440 nm as above can suppress coloring or save the amount used of the dyeing agent described above. The upper limit of the transmittance of light with a wavelength of 440 nm is not particularly limited and, for example, 95% or less.
The transmittance of light with a wavelength of 450 nm in the entire spectacle lens is preferably 70% or more, more preferably 72% or more, and still more preferably 75% or more. A lens substrate that has a transmittance of light with a wavelength of 450 nm as above can suppress coloring or save the amount used of the dyeing agent described above. The upper limit of the transmittance of light with a wavelength of 450 nm is not particularly limited and, for example, 95% or less.

The transmittance of light with a wavelength of 550 nm in the entire spectacle lens is preferably 70% or more, more preferably 80% or more, and still more preferably 85% or more. The upper limit of the transmittance of light with a wavelength of 550 nm is not particularly limited and, for example, 95% or less.

The luminous transmittance of the spectacle lens is preferably 70% or more, more preferably 80% or more, still more preferably 85% or more, and even more preferably 90% or more. The upper limit of the luminous transmittance is not particularly limited and, for example, 100% or less and 95% or less.

The transmittance described above is a transmittance at the optical center of a spectacle lens and can be measured using a spectrophotometer. As the spectrophotometer, for example, "U-4100" (trade name, manufactured by Hitachi, Ltd) can be used. The transmittance described above can be achieved by adjusting the content of the compound 1 according to the thickness of the spectacle lens.

[Examples]

Hereinafter, the present embodiment will be described in more detail with reference to examples and comparative examples. It should be noted that the present invention is not limited to these examples.

[Measuring Methods]

<Transmittance>

The transmittance of light of each wavelength was measured using a spectrophotometer "U-4100" (trade name, manufactured by Hitachi, Ltd). The measured point of the transmittance was set to the optical center of the spectacle lens and lens substrate.

<Largest Maximum Absorption Wavelength (λmax)>

The largest maximum absorption wavelength (λmax) of the coloring agent was measured under the following conditions using a spectrophotometer "U-4100" (trade name, manufactured by Hitachi, Ltd).

Sample: toluene solution (coloring agent content: 20 ppm by mass)
Measurement mode: Transmittance
Optical path length: 10 mm

(Luminous Transmittance)

The luminous transmittance was measured according to JIS T 7333:2005. The measured point of the transmittance was set to the optical center of the spectacle lens and lens substrate.

<Refractive Index and Abbe's Number of Lens>

The refractive index of a spectacle lens was measured using a precision refractometer "KPR-2000" (manufactured by Kalnew Optical Industries) at 25°C with F' line (488.0 nm), C' line (643.9 nm), and e line (546.1 nm). Then, the Abbe's number was calculated using the following formula.

$$\text{Abbe's number } \nu e = (ne-1)/(nF'-nC')$$

The ne represents a refractive index measured with the e line, nF' represents a refractive index measured with the F' line, and nC' represents a refractive index measured with the C' line.

<Blue LP Test>

Laser light was applied to the optical center of a spectacle lens from a laser pointer (LP) having an emitting wavelength of 405110 nm (output < 1 mW), thereby observing whether the laser light passes through or not.

(Evaluation Standard)

O: Laser light was greatly reduced.
Δ: Laser light was slightly reduced.
x: Laser light passed.

<Example 1>

To 50.28 parts by mass of a mixture of 2,5-bis(isocyanatomethyl)-bicyclo[2.2.1]heptane and 2,6-bis(isocyanatomethyl)-bicyclo[2.2.1]heptane, 0.06 parts by mass of dimethyltin dichloride as a catalyst, 0.15 parts by mass of an acidic phosphate ester, "JP 506H" (trade name, manufactured by Johoku Chemical Industry Co., Ltd.) as a mold release agent, 0.55 parts by mass of 2-ethylhexyl 2-(2-hydroxy-4-ethoxyphenyl)-2H-benzotriazole-5-carboxylate, 0.1037 parts by mass of Disperse Violet 27 (largest maximum absorption wavelength in a toluene solution of 20 ppm by mass: 586 nm) and 0.0013 parts by mass of Solvent Red 52 (largest maximum absorption wavelength in a 20-ppm by mass toluene solution: 543 nm) were added, and the mixture was stirred and mixed. Thereafter, 25.50 parts by mass of pentaerythritol tetrakis(3-mercaptopropionate) and 24.22 parts by mass of 1,2-bis(2-mercaptoethylthio)-3-mercaptopropane were added, and the resultant mixture was stirred for 30 minutes under reduced pressure at 10 mmHg to prepare a curable composition. The curable composition was then injected into a mold for molding lenses (0.00 D, the wall thickness was set to 1.6 mm), which was composed of a glass mold and a resin gasket and had been prepared in advance, and polymerization was conducted in an electric furnace from 20°C to 120°C over a period of 24 hours. After completion of the polymerization, the gasket and the mold were removed, followed by heat treatment for 2 hours at 120°C to obtain a lens substrate. The optical properties and spectral transmittance of the obtained lens substrate were measured. The results are shown in Table 2. The luminous transmittance was 88.6%.

<Examples 2 to 4, Comparative Examples 1 to 8>

Lens substrates were obtained in the same manner as in Example 1, except that the composition of raw materials was as shown in Table 1. The optical properties and spectral transmittance of the obtained lens substrate were measured. The results are shown in Table 2. The luminous transmittance of the lens substrate of Example 3 was 88.0%.

<Example 5>

A 300-mL eggplant flask was charged with 79.92 parts by mass of bis-(β-epithiopropyl) sulfide, 14.00 parts by mass of sulfur, and 0.25 parts by mass of compound 1-1, and degassed for 60 minutes while heating the flask at 60°C. Then, 0.467 parts by mass of 1-methyl-2-mercapto-1H-imidazole was added thereto, and while stirring the resultant mixture, a preliminary reaction was performed for 60 minutes at 60°C in a sealed state at ordinary pressure. After that, the mixture was cooled to 20°C, and 0.13 parts by mass of dibutyltin dichloride was added to terminate the preliminary reaction.

In a separate container, 6.08 parts by mass of bis(2-mercaptoethyl) sulfide, 0.001 parts by mass of an acidic phosphate ester, "JP 506H" (trade name, manufactured by Johoku Chemical Industry Co., Ltd.), 0.020 parts by mass of tetrabutylphosphonium bromide, and as a bluing agent, 1050 ppb by mass of Disperse Violet 27 (largest maximum absorption wavelength in a 20-ppm by mass toluene solution: 586 nm) and 450 ppb by mass of Solvent Red 52 (largest maximum absorption wavelength in a toluene solution of 20 ppm by mass: 543 nm) were charged and mixed to prepare a solution, The resultant solution was added to the pre-reacted mixture, and the resultant mixture was degassed while stirring at 20°C to form a homogeneous solution.

Next, the homogeneous solution was injected into a mold for molding lenses (0.00 D, the wall thickness was set to 2.00 mm), which was composed of a glass mold and a resin gasket, while filtrating the solution through a 3-micron polyethylene terephthalate filter. Finally, the mold was placed in an oven, and the temperature therein was raised from 30°C to 100°C over 24 hours to polymerize and cure the material, and then the mold was removed, thereby preparing a lens substrate. The optical properties and spectral transmittance of the obtained lens substrate were measured. The results are shown in Table 4. The luminous transmittance was 84.2%.

<Comparative Examples 9 and 10>

Lens substrates were obtained in the same manner as in Example 9, except that the composition of raw materials was as shown in Table 3. The optical properties and spectral transmittance of the obtained lens substrate were measured. The results are shown in Table 4.

<Example 6>

In a 300-mL eggplant flask, 95.00 parts by mass of bis(β-epithiopropyl) disulfide, 5.00 parts by mass of a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaoundecane-1,1-dithiol, 0.40 parts by mass of the compound 1-1, 0.001 parts by mass of an acidic phosphate ester, "JP 506H" (trade name, manufactured by Johoku Chemical Industry Co., Ltd.), and as a bluing agent, 1400 ppb by mass of Disperse Violet 27 (largest maximum absorption wavelength in a toluene solution of 20 ppm by mass: 586 nm), 600 ppb by mass of Solvent Red 52 (largest maximum absorption wavelength in a 20-ppm by mass toluene solution: 543 nm), and 0.10 parts by mass of dicyclohexylmethylamine were charged and degassed at 20°C for 60 minutes to form a homogeneous solution.

Next, the homogeneous solution was injected into a mold for molding lenses (0.00 D, the wall thickness was set to 2.00 mm), which was composed of a glass mold and a resin gasket, while filtrating the solution through a 3-micron polyethylene terephthalate filter. Finally, the mold was placed in an oven, and the temperature therein was raised from 30°C to 100°C over 24 hours to polymerize and cure the material, and then the mold was removed, thereby preparing a lens substrate. The optical properties and spectral transmittance of the obtained lens substrate were measured. The results are shown in Table 4.

<Comparative Example 11>

A lens substrate was obtained in the same manner as in Example 6, except that the composition of raw materials was as shown in Table 3. The optical properties and spectral transmittance of the obtained lens substrate were measured. The results are shown in Table 4.

Table 1

| | Compound | | Main materials | | | | | | Bluing agent | |
|---|---|---|---|---|---|---|---|---|---|---|
| | Species | Amount added (parts by mass) | Isocyanate component | Amount added (parts by mass) | Thiol component (1) | Amount added (parts by mass) | Thiol component (2) | Amount added (parts by mass) | Blue type (ppb by mass) | Red type (ppb by mass) |
| Example1 | Compound 1-1 | 0.55 | NBDI | 50.28 | PETMP | 25.50 | TFSH | 24.22 | 1037 | 13 |
| Example2 | | 0.50 | HXDI | 47.53 | PETMA | 26.47 | DMMD | 26.00 | 0 | 0 |
| Example3 | | 0.30 | XDI | 50.60 | FFSH | 49.40 | --- | --- | 1170 | 30 |
| Example4 | | 0.30 | XDI | 52.03 | TFSH | 47.97 | --- | --- | 1170 | 30 |
| Comparative example 1 | Compound 51 | 1.00 | NBDI | 50.28 | PETMP | 25.50 | TFSH | 24.22 | 415 | 5 |
| Comparative example 2 | Compound 52 | 1.00 | NBDI | 50.28 | PETMP | 25.50 | TFSH | 24.22 | 3950 | 50 |
| Comparative example 3 | Compound 51 | 1.00 | HXDI | 47.53 | PETMA | 26.47 | DMMD | 26.00 | 0 | 0 |
| Comparative example 4 | Compound 51 | 0.45 | XDI | 50.60 | FFSH | 49.40 | --- | --- | 585 | 15 |
| Comparative example 5 | Compound 52 | 0.65 | XDI | 50.60 | FFSH | 49.40 | --- | --- | 2450 | 420 |
| Comparative example 6 | Compound 53 | 1.25 | XDI | 50.60 | FFSH | 49.40 | --- | --- | 450 | 0 |
| Comparative example 7 | Compound 51 | 0.45 | XDI | 52.03 | TFSH | 47.97 | --- | --- | 585 | 15 |
| Comparative example 8 | Compound 52 | 0.65 | XDI | 52.03 | TFSH | 47.97 | --- | --- | 2450 | 420 |

[Table 2]

Table 2

| | Optical center thickness (mm) | Optical properties | | Spectral transmittance(%) (nm) | | | | | | | Blue LP test |
|---|---|---|---|---|---|---|---|---|---|---|---|
| | | ne | ve | 400 | 410 | 420 | 430 | 440 | 450 | 550 | |
| Example 1 | 1.6 | 1.60 | 40.5 | 0.0 | 0.6 | 33.7 | 78.1 | 87.9 | 89.2 | 88.5 | ○ |
| Example2 | 1.6 | 1.60 | 40.5 | 0.0 | 0.8 | 41.5 | 81.6 | 88.9 | 89.9 | 89.8 | ○ |
| Example3 | 1.8 | 1.67 | 31.0 | 0.0 | 0.3 | 26.8 | 72.7 | 85.3 | 87.1 | 86.4 | ○ |
| Example4 | 1.8 | 1.67 | 31.0 | 0.0 | 0.4 | 27.4 | 73.3 | 85.5 | 87.3 | 86.4 | ○ |
| Comparative example 1 | 1.6 | 1.60 | 39.5 | 17.2 | 71.0 | 87.8 | 89.3 | 89.5 | 89.5 | 89.2 | × |
| Comparative example2 | 1.6 | 1.60 | 39.5 | 0.0 | 0.2 | 20.0 | 67.5 | 85.1 | 88.4 | 86.3 | ○ |
| Comparative example3 | 1.6 | 1.60 | 39.5 | 17.4 | 71.2 | 87.9 | 89.4 | 89.6 | 89.6 | 90.3 | × |
| Comparative example4 | 1.8 | 1.67 | 30.5 | 17.8 | 72.5 | 85.2 | 87.0 | 87.4 | 87.5 | 87.4 | × |
| Comparative example5 | 2.0 | 1.67 | 30.5 | 0.0 | 0.0 | 14.8 | 62.0 | 82.6 | 86.9 | 84.1 | ○ |
| Comparative example6 | 2.0 | 1.67 | 30.0 | 2.6 | 51.3 | 81.1 | 86.5 | 87.4 | 87.6 | 86.8 | × |
| Comparative example7 | 1.8 | 1.67 | 30.5 | 2.8 | 49.0 | 76.1 | 83.6 | 86.2 | 87.2 | 86.7 | × |
| Comparative example8 | 1.8 | 1.67 | 30.5 | 0.0 | 1.0 | 16.8 | 63.0 | 82.3 | 86.3 | 84.2 | ○ |

Table 3

| | Compound | | Main materials | | | | | | Bluing agent | |
|---|---|---|---|---|---|---|---|---|---|---|
| | Species | Amount added (parts by mass) | Epithio compound | Amount added (parts by mass) | Vulcanizing agent | Amount added (parts by mass) | Thiol compound | Amount added (parts by mass) | Blue type (ppb by mass) | Red type (ppb by mass) |
| Examples | Compound 1-1 | 0.25 | ETPS | 79.92 | Sulfur | 14.00 | MES | 6.08 | 1050 | 450 |
| Examples | | 0.40 | ETPDS | 95.00 | --- | --- | FFSH | 5.00 | 1400 | 600 |
| Comparative example9 | Compound 54 | 1.75 | ETPS | 79.92 | Sulfur | 14.00 | MES | 6.08 | 700 | 300 |
| Comparative example10 | Compound 52 | 0.32 | ETPS | 79.92 | Sulfur | 14.00 | MES | 6.08 | 3500 | 1000 |
| Comparative example 11 | Compound53 | 0.88 | ETPDS | 95.00 | --- | --- | FFSH | 5.00 | 700 | 300 |

[Table 4]

Table 4

| | Optical center thickness (mm) | Optical properties | | Spectral transmittance(%) (nm) | | | | | | | Blue LP test |
|---|---|---|---|---|---|---|---|---|---|---|---|
| | | ne | ve | 400 | 410 | 420 | 430 | 440 | 450 | 550 | |
| Examples | 2.0 | 1.74 | 32.5 | 0.0 | 0.6 | 38.2 | 76.5 | 84.1 | 85.5 | 84.9 | ○ |
| Example6 | 2.0 | 1.74 | 32.5 | 0.0 | 0.0 | 21.6 | 70.5 | 82.7 | 84.8 | 82.4 | ○ |
| Comparative example9 | 2.0 | 1.74 | 31.0 | 0.0 | 24.2 | 72.3 | 82.1 | 84.1 | 85.0 | 84.8 | × |
| Comparative example10 | 2.0 | 1.74 | 32.0 | 0.0 | 0.4 | 23.4 | 65.6 | 81.6 | 84.9 | 82.0 | ○ |
| Comparative example11 | 2.0 | 1.74 | 31.0 | 1.3 | 41.2 | 74.9 | 82.7 | 84.5 | 85.2 | 84.6 | × |

The abbreviations in Table 1 are as follows.

Compound 1-1: 2-Ethylhexyl 2-(2-hydroxy-4-ethoxyphenyl)-2H-benzotriazole-5-carboxylate
Compound 51: 2-(2-Hydroxy-4-octyloxyphenyl)-2H-benzotriazole
Compound 52: 2-(3-tert-Butyl-2-hydroxy-5-methylphenyl)-5-chloro-2H-benztriazole
Compound 53: 2-(2-Hydroxy-5-methylphenyl)-2H-benzotriazole
Compound 54: 2-(2-hydroxy-4-ethoxyphenyl)-2H-benzotriazole
NBDI: Mixture of 2,5-bis(isocyanatomethyl)-bicyclo[2.2.1]heptane and 2,6-bis(isocyanatomethyl)bicyclo[2.2.1]heptane.
PETMP: Pentaerythritol tetrakis(3-mercaptopropionate)
TFSH: 1,2-Bis[(2-mercaptoethyl)thio)]-3-mercaptopropane
HXDI: 1,3-Bis(isocyanatomethyl)cyclohexane
PETMA: Pentaerythritol tetrakis(2-mercaptoacetate)
DMMD: 2,5-Bis(mercaptomethyl)-1,4-dithiane
XDI: 1,3-Bis(isocyanatomethyl)benzene
FFSH: Mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol
ETPS: Bis-(β-epithiopropyl) sulfide
MES: Bis-(2-mercaptoethyl) sulfide
ETPDS: Bis-(β-epithiopropyl) disulfide

## Claims

**1.** A spectacle lens comprising:
a compound represented by formula (1)

[C1]

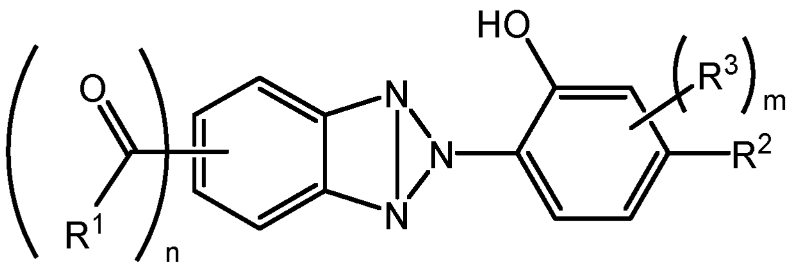

(1)

wherein

$R^1$ is an alkoxy group having 1 to 20 carbon atoms;
$R^2$ is an alkyl group having 1 to 12 carbon atoms or an alkoxy group having 1 to 12 carbon atoms;
$R^3$ is an alkyl group having 1 to 12 carbon atoms or an alkoxy group having 1 to 12 carbon atoms;
n is an integer of 1 to 2; and
m is an integer of 0 to 2.

2. The spectacle lens according to claim 1, wherein

the $R^1$ is an alkoxy group having 4 to 20 carbon atoms;
the $R^2$ is an alkoxy group having 1 to 12 carbon atoms;
n is 1; and
the m is 0.

3. The spectacle lens according to claim 1 or 2, wherein the $R^1$ is a branched alkoxy group having 4 to 20 carbon atoms.

4. The spectacle lens according to any one of claims 1 to 3, wherein

the compound represented by the formula (1) is at least one selected from the group consisting of
2-ethylhexyl 2-(2-hydroxy-4-methoxyphenyl)-2H-benzotriazole-5-carboxylate,
2-ethylhexyl 2-(2-hydroxy-4-ethoxyphenyl)-2H-benzotriazole-5-carboxylate,
2-ethylhexyl 2-(2-hydroxy-4-octyloxyphenyl)-2H-benzotriazole-5-carboxylate,
methyl 2-(2-hydroxy-4-methoxyphenyl)-2H-benzotriazole-5-carboxylate,
methyl 2-(2-hydroxy-4-ethoxyphenyl)-2H-benzotriazole-5-carboxylate,
methyl 2-(2-hydroxy-4-octyloxyphenyl)-2H-benzotriazole-5-carboxylate,
ethyl 2-(2-hydroxy-4-methoxyphenyl)-2H-benzotriazole-5-carboxylate,
ethyl 2-(2-hydroxy-4-ethoxyphenyl)-2H-benzotriazole-5-carboxylate,
ethyl 2-(2-hydroxy-4-octyloxyphenyl)-2H-benzotriazole-5-carboxylate,
n-octyl 2-(2-hydroxy-4-methoxyphenyl)-2H-benzotriazole-5-carboxylate,
n-octyl 2-(2-hydroxy-4-ethoxyphenyl)-2H-benzotriazole-5-carboxylate, and
n-octyl 2-(2-hydroxy-4-octyloxyphenyl)-2H-benzotriazole-5-carboxylate.

5. The spectacle lens according to any one of claims 1 to 4, wherein
the compound represented by the formula (1) is

2-ethylhexyl 2-(2-hydroxy-4-methoxyphenyl)-2H-benzotriazole-5-carboxylate, or
2-ethylhexyl 2-(2-hydroxy-4-ethoxyphenyl)-2H-benzotriazole-5-carboxylate.

6. The spectacle lens according to any one of claims 1 to 5, wherein

a transmittance of light of a wavelength of 410 nm in the entire spectacle lens is 5% or less, and
a transmittance of light of a wavelength of 430 nm in the entire spectacle lens is 70% or more.

7. The spectacle lens according to any one of claims 1 to 6, comprising a coloring agent L having a largest maximum absorption wavelength within a range of 550 nm or more and 600 nm or less in a 20-ppm by mass toluene solution.

**8.** The spectacle lens according to any one of claims 1 to 7, comprising a coloring agent S having a largest maximum absorption wavelength within a range of 500 nm or more and less than 550 nm in a 20-ppm by mass toluene solution.

**9.** The spectacle lens according to any one of claims 1 to 8, comprising
a lens substrate that contains the compound represented by the formula (1) and a resin.

**10.** The spectacle lens according to claim 9, wherein the resin is a cured product of an active hydrogen-containing compound component and an isocyanate component including at least one selected from the group consisting of bis(isocyanatomethyl)bicyclo[2.2.1]heptane, bis(isocyanatomethyl)cyclohexane, bis(isocyanatomethyl)benzene, tolylene diisocyanate, diphenylmethane diisocyanate, dicyclohexylmethane diisocyanate, hexamethylene diisocyanate, and pentamethylene diisocyanate.

**11.** The spectacle lens according to claim 10, wherein the active hydrogen-containing compound component is at least one selected from the group consisting of toluenediamine, pentaerythritol tetrakis(mercaptoacetate), pentaerythritol tetrakis(mercaptopropionate), trimethylolpropane tris(mercaptoacetate), trimethylolpropane tris(mercaptopropionate), bis(mercaptoethylthio)mercaptopropane, bis(mercaptomethyl)-3,6,9-trithiaundecanedithiol, dimercaptoethyl sulfide, bis(mercaptomethyl)dithiane, dimercaptoethyl ether, and diethylene glycol.

**12.** The spectacle lens according to claim 11, wherein the bis(mercaptomethyl)-3,6,9-trithiaundecanedithiol is a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.

**13.** The spectacle lens according to claim 9, wherein the resin is an episulfide resin.

**14.** The spectacle lens according to any one of claims 9 to 13, wherein the spectacle lens contains 0.05 parts by mass or more and 2.00 parts by mass or less of the compound represented by formula (1) in relation to 100 parts by mass of the resin.

**15.** The spectacle lens according to any one of claims 9 to 14, wherein the spectacle lens contains 0.05 parts by mass or more and 0.60 parts by mass or less of the compound represented by the formula (1) in relation to 100 parts by mass of the resin.

**16.** The spectacle lens according to any one of claims 9 to 15, wherein the lens substrate has a refractive index ne of 1.52 or more and 1.80 or less.

**17.** The spectacle lens according to any one of claims 9 to 16, wherein the lens substrate has a refractive index ne of 1.70 or more and 1.80 or less.

**18.** The spectacle lens according to any one of claims 9 to 17, comprising at least one selected from the group consisting of a hard coat layer, a base layer, and an anti-reflection layer.

**19.** The spectacle lens according to any one of claims 9 to 18, wherein the lens substrate is a meniscus substrate.

**20.** The spectacle lens according to claim 19, wherein the spectacle lens has an optical center thickness of 0.5 mm or more and 10.0 mm or less.

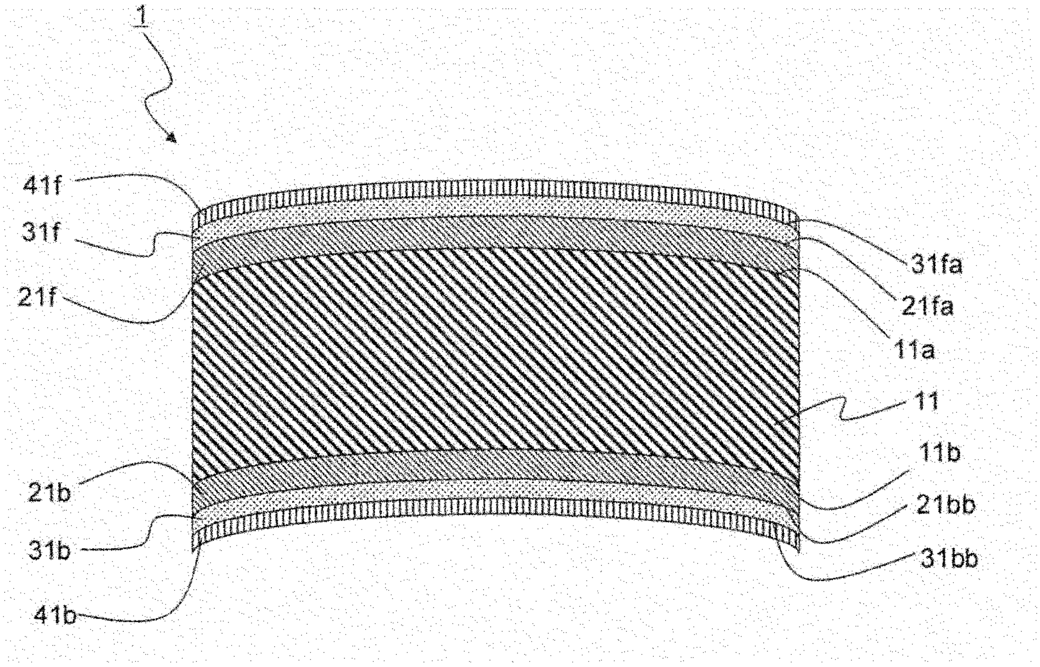
1
41f
31f
21f
31fa
21fa
11a
11
11b
21b
21bb
31b
31bb
41b

**INTERNATIONAL SEARCH REPORT**

International application No.
**PCT/JP2021/036102**

**A. CLASSIFICATION OF SUBJECT MATTER**

***G02C 7/02***(2006.01)i; ***C08G 18/38***(2006.01)i; ***C08G 75/08***(2006.01)i; ***C08K 5/3475***(2006.01)i; ***C08L 75/04***(2006.01)i; ***C08L 81/02***(2006.01)i; ***G02B 1/00***(2006.01)i; ***G02C 1/00***(2006.01)i; ***G02C 7/00***(2006.01)i
FI: G02C7/02; G02C7/00; C08G18/38 076; C08L75/04; C08K5/3475; C08L81/02; C08G75/08; G02B1/00; G02C1/00

According to International Patent Classification (IPC) or to both national classification and IPC

**B. FIELDS SEARCHED**

Minimum documentation searched (classification system followed by classification symbols)

G02C7/02; C08G18/38; C08G75/08; C08K5/3475; C08L75/04; C08L81/02; G02B1/00; G02C1/00; G02C7/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2018/180632 A1 (SHIPURO KASEI KK) 04 October 2018 (2018-10-04) paragraphs [0005], [0013]-[0015], [0021], [0041]-[0043], [0054], fig. 4 | 1-5, 9, 14-15 |
| Y | paragraphs [0005], [0013]-[0015], [0021], [0041]-[0043], [0054], fig. 4 | 6-8, 10-13, 16-20 |
| Y | WO 2020/129930 A1 (TOKUYAMA CORP.) 25 June 2020 (2020-06-25) paragraphs [0132], [0133], [0144], [0153], [0159], [0174], table 2 | 6, 16-18 |
| Y | WO 2020/129933 A1 (TOKUYAMA CORP.) 25 June 2020 (2020-06-25) paragraphs [0061]-[0067], table 1 | 6, 16-18 |
| Y | JP 2008-169312 A (SEIKO EPSON CORP.) 24 July 2008 (2008-07-24) paragraph [0049], fig. 1 | 7-8 |
| Y | WO 02/41042 A1 (NIPPON OIL & FATS CO., LTD.) 23 May 2002 (2002-05-23) p. 12, table 2 | 7-8 |
| Y | WO 2020/162592 A1 (MITSUI CHEMICALS INC) 13 August 2020 (2020-08-13) paragraphs [0018]-[0042], [0072]-[0090], [0099] | 10-13, 18 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 November 2021** | **07 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2021/036102**

**C. DOCUMENTS CONSIDERED TO BE RELEVANT**

| Category* | Citation of document, with indication, where appropriate, of the relevant passages | Relevant to claim No. |
|---|---|---|
| Y | JP 2012-181268 A (HOYA CORP.) 20 September 2012 (2012-09-20) paragraphs [0013]-[0016], [0030], [0036] | 10-13, 18, 20 |
| Y | JP 2013-238634 A (ITO OPTICAL INDUSTRIAL CO., LTD.) 28 November 2013 (2013-11-28) fig. 3-5 | 19 |
| A | WO 2018/190281 A1 (SHIPURO KASEI KK) 18 October 2018 (2018-10-18) claims | 1-20 |
| A | US 2019/0367463 A1 (EVERLIGHT CHEMICAL INDUSTRIAL CORP.) 05 December 2019 (2019-12-05) claims | 1-20 |
| P, X | WO 2021/054459 A1 (MITSUI CHEMICALS INC.) 25 March 2021 (2021-03-25) paragraphs [0017]-[0170], (compounds (32)) | 1-20 |

Form PCT/ISA/210 (second sheet) (January 2015)

**INTERNATIONAL SEARCH REPORT**
**Information on patent family members**

International application No.
**PCT/JP2021/036102**

| Patent document cited in search report | Publication date (day/month/year) | Patent family member(s) | Publication date (day/month/year) |
|---|---|---|---|
| WO 2018/180632 A1 | 04 October 2018 | US 2020/0031782 A1<br>paragraphs [0005], [0016]-[0018], [0024], [0070]-[0073], [0096], fig. 4<br>JP 6301526 B1<br>KR 10-2019-0113895 A<br>CN 110494425 A<br>JP 2018-168089 A | |
| WO 2020/129930 A1 | 25 June 2020 | WO 2020/129931 A1 | |
| WO 2020/129933 A1 | 25 June 2020 | WO 2020/129931 A1 | |
| JP 2008-169312 A | 24 July 2008 | (Family: none) | |
| WO 02/41042 A1 | 23 May 2002 | US 2003/0047722 A1<br>paragraphs [0082]-[0087], table 2<br>EP 1271186 A1<br>KR 10-2002-0077364 A<br>CN 1418318 A<br>JP 2002-156502 A<br>JP 2003-105033 A | |
| WO 2020/162592 A1 | 13 August 2020 | (Family: none) | |
| JP 2012-181268 A | 20 September 2012 | (Family: none) | |
| JP 2013-238634 A | 28 November 2013 | (Family: none) | |
| WO 2018/190281 A1 | 18 October 2018 | US 2020/0157059 A1<br>claims<br>US 2020/0290981 A1<br>KR 10-2019-0113896 A<br>CN 110546141 A<br>JP 2018-177696 A | |
| US 2019/0367463 A1 | 05 December 2019 | EP 3578550 A1<br>TW 202003477 A<br>CN 110563661 A | |
| WO 2021/054459 A1 | 25 March 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014133111 A